# EUROPEAN PATENT APPLICATION

(11) **EP 4 615 141 A1**
(43) Date of publication of application: **10.09.2025**
(21) Application number: 23886382.3
(22) Date of filing: 03.11.2023
(51) Int. Cl.: H04W 74/08, H04W 74/00, H04W 72/21, H04W 72/12, H04W 72/04, H04W 48/10, H04L 1/18, H04L 27/26

(54) **SIGNAL TRANSMISSION/RECEPTION METHOD FOR WIRELESS COMMUNICATION, AND APPARATUS THEREFOR**

(30) Priority: 04.11.2022 US 202263422543 P
(71) Applicant: LG Electronics Inc., Yeongdeungpo-gu Seoul 07336 (KR)
(72) Inventor: LEE, Youngdae, Seoul 06772 (KR); AHN, Seungjin, Seoul 06772 (KR); KIM, Jaehyung, Seoul 06772 (KR); LEE, Sunghoon, Seoul 06772 (KR)
(74) Representative: Plasseraud IP
(86) International application number: PCT/KR2023/017552
(87) International publication number: WO 2024/096688

(57) **Abstract**

A terminal according to one embodiment can transmit a first message for performing a random access channel (RACH) procedure for a specific cell, receive, from the specific cell, a second message responding to the first message, and transmit, on the basis of a specific minimum time interval, a physical uplink control channel (PUCCH) including a hybrid automatic repeat request-acknowledgement (HARQ-ACK) related to the second message.

## Description

### TECHNICAL FIELD

The present disclosure relates to wireless communication, and more particularly, to a method of transmitting or receiving an uplink/downlink signal in a wireless communication system and apparatus therefor.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### Technical Problem

The object of the present disclosure is to provide a method of transmitting and receiving signals more accurately and efficiently.

The objects of present disclosure are not limited to what has been particularly described hereinabove, and other objects that the present disclosure could achieve will be more clearly understood from the following detailed description.

### Technical Solution

According to an aspect, a method of transmitting a signal by a user equipment (UE) in a wireless communication system may include transmitting a first message for performing a Random Access Channel (RACH) procedure for a specific cell, receiving a second message in response to the first message from the specific cell, and transmitting a Physical Uplink Control Channel (PUCCH) including a Hybrid Automatic Repeat Request-acknowledgement (HARQ-ACK) related to the second message based on a specific minimum time interval, wherein the specific minimum time interval is a sum of a processing time of a Physical Downlink Shared Channel (PDSCH) according to a capability of the UE and a specific time, and wherein, based on that the UE is a first UE with a bandwidth limited to a first size, the specific time is configured to a second specific time that is longer than a first specific time for a second UE with a bandwidth not limited to the first size.

The PUCCH may be transmitted based on the time interval between the last symbol of the PDSCH for the second message and the first symbol of the PUCCH being not less than the specific minimum time.

The second specific time may be configured to a time longer than the first specific time of 0.5 msec.

The PDSCH may include a success Random Access Response (RAR) for the UE.

The second specific time may be configured to 1 msec or 1.5 msec based on a Subcarrier Spacing (SCS) size of the PDSCH related to the second message.

The second specific time may be configured to 1.5 msec based on the SCS size being 15 KHz.

The second specific time may be configured to 1 msec based on the SCS size being 30 KHz.

The second message may include a Success Random Access Response (RAR), and based on the UE being the first UE, a transmission slot of the PUCCH may be determined based on a value indicated by a HARQ Feedback Timing Indicator field included in the Success RAR and a slot offset configured separately for the first UE.

The slot offset may be configured through SystemInformationBlockType1 (SIB1) or System Information (SI).

The first UE may be a first reduced capability (RedCap) type UE capable of performing communication in a limited bandwidth of 5MHz, and the second UE may be a second RedCap type UE capable of performing communication in a limited bandwidth of 20 MHz.

According to another aspect, a non-transitory computer-readable storage medium storing instructions for performing the signal receiving method may be provided.

According to another aspect, a UE for performing the signal receiving method may be provided.

According to another aspect, a processing device for controlling a UE for performing the signal receiving method may be provided.

According to another aspect, a method of receiving a signal by a base station in a wireless communication system includes receiving a first message for performing a Random Access Channel (RACH) procedure from a user equipment (UE), transmitting a second message in response to the first message, and receiving a Physical Uplink Control Channel (PUCCH) including a Hybrid Automatic Repeat Request-acknowledgement (HARQ-ACK) related to the second message based on a specific minimum time interval, wherein the specific minimum time interval is the sum of a processing time of a Physical Downlink Shared Channel (PDSCH) according to a capability of the UE and a specific time, and based on that the UE is a first UE with a bandwidth limited to a first size, the specific time is configured to a second specific time that is longer than a first specific time for a second UE with a bandwidth not limited to the first size.

According to another aspect, a BS for performing the signal transmitting method may be provided.

### Advantageous Effects

According to an embodiment of the present disclosure, signal transmission and reception can be performed more accurately and efficiently in a wireless communication system.

The present disclosure is not limited to the technical effects described above, and other technical effects can be inferred from the detailed description.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIGS. 4 and 5 are drawings for explaining the structure and transmission method of an SSB (Synchronization Signal Block).
FIG. 6 illustrates a random access procedure.
FIG. 7 is a diagram illustrating an exemplary 2-step RACH procedure to which various embodiments of the present disclosure are applicable.
FIG. 8 is a diagram illustrating an exemplary contention-free RACH procedure to which various embodiments of the present disclosure are applicable.
FIG. 9 illustrates exemplary mapping of physical channels in a slot.
FIG. 10 is a diagram showing a flow of a method of transmitting and receiving a signal according to an embodiment.
FIG. 11 is a diagram for explaining a method of configuring a plurality of sub-BWPs in one BWP.
FIG. 12 is a diagram for explaining a method by which a UE performs a RACH procedure to transmit a signal to a specific cell or BS.
FIG. 13 is a diagram for explaining a method by which a BS receives a signal from a UE performing a RACH procedure.
FIGS. 14 and 15 illustrate a communication system 1 and wireless devices applied to the present disclosure.
FIG. 16 is a diagram for explaining a DRX (Discontinuous Reception) operation of a UE according to one embodiment.

### DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto. LTE refers to technologies after 3GPP TS 36.xxx Release 8. Specifically, LTE technologies after 3GPP TS 36.xxx Release 10 are referred to as LTE-A, and LTE technologies after 3GPP TS 36.xxx Release 13 are referred to as LTE-A pro. 3GPP NR refers to technologies after TS 38.xxx Release 15. LTE/NR may be referred to as 3GPP systems. In this document, "xxx" represents the detail number of a specification. LTE/NR may be collectively referred to as 3GPP systems.

Details of the background, terminology, abbreviations, etc. used herein may be found in documents published before the present disclosure. For example, the present disclosure may be supported by the following documents:

### 3GPP NR

- 3GPP TS 38.211: Physical channels and modulation
- 3GPP TS 38.212: Multiplexing and channel coding
- 3GPP TS 38.213: Physical layer procedures for control
- 3GPP TS 38.214: Physical layer procedures for data
- 3GPP TS 38.215: Physical layer measurements
- 3GPP TS 38.300: NR and NG-RAN Overall Description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol
- 3GPP TS 38.323: Packet Data Convergence Protocol (PDCP)
- 3GPP TS 38.331: Radio Resource Control (RRC) protocol
- 3GPP TS 37.324: Service Data Adaptation Protocol (SDAP)
- 3GPP TS 37.340: Multi-connectivity; Overall description
- 3GPP TS 23.287: Application layer support for V2X services; Functional architecture and information flows
- 3GPP TS 23.501: System Architecture for the 5G System
- 3GPP TS 23.502: Procedures for the 5G System
- 3GPP TS 23.503: Policy and Charging Control Framework for the 5G System; Stage 2
- 3GPP TS 24.501: Non-Access-Stratum (NAS) protocol for 5G System (5GS); Stage 3
- 3GPP TS 24.502: Access to the 3GPP 5G Core Network (5GCN) via non-3GPP access networks
- 3GPP TS 24.526: User Equipment (UE) policies for 5G System (5GS); Stage 3

### Technical terms used in this document

- UE: User Equipment
- SSB: Synchronization Signal Block
- MIB: Master Information Block
- RMSI: Remaining Minimum System Information
- FR1: Frequency Range 1, which refers to the frequency range below 6 GHz (e.g., 450 MHz to 6000 MHz).
- FR2: Frequency Range 2, which refers to the millimeter wave (mmWave) region above 24 GHz (e.g., 24250 MHz to 52600 MHz).
- BW: Bandwidth
- BWP: Bandwidth Part
- RNTI: Radio Network Temporary Identifier
- CRC: Cyclic Redundancy Check
- SIB: System Information Block
- SIB1: SIB1 for NR devices = RMSI (Remaining Minimum System Information). Broadcasts information necessary for cell connection of NR UEs.
- CORESET (COntrol REsource SET): Time/frequency resource for NR UE to attempt candidate PDCCH decoding
- CORESET#0: CORESET for Type0-PDCCH CSS set for NR devices (Set in MIB)
- Type0-PDCCH CSS set: a search space set in which an NR UE monitors a set of PDCCH candidates for a DCI format with CRC scrambled by a SI-RNTI
- MO: PDCCH Monitoring Occasion for Type0-PDCCH CSS set
- SIB1-R: (additional) SIB1 for reduced capability NR devices. May be limited to cases where it is generated as a separate TB from SIB1 and transmitted as a separate PDSCH.
- CORESET#0-R: CORESET#0 for reduced capability NR devices
- Type0-PDCCH-R CSS set: a search space set in which a redcap UE monitors a set of PDCCH candidates for a DCI format with CRC scrambled by a SI-RNTI
- MO-R: PDCCH Monitoring Occasion for Type0-PDCCH CSS set
- Cell defining SSB (CD-SSB): SSB containing RMSI scheduling information among NR SSBs
- Non-cell defining SSB (non-CD-SSB): An SSB that is placed in the NR sync raster but does not contain RMSI scheduling information for the cell for measurement purposes. However, it may contain information indicating the location of the cell defining SSB.
- SCS: subcarrier spacing
- SI-RNTI: System Information Radio-Network Temporary Identifier
- Camp on: "Camp on" is the UE state in which the UE stays on a cell and is ready to initiate a potential dedicated service or to receive an ongoing broadcast service.
- TB: Transport Block
- RSA (Redcap standalone): Cells that support only Redcap devices or services.
- SIB1(-R)-PDSCH: PDSCH transmitting SIB1(-R)
- SIB1(-R)-DCI: DCI for scheduling SIB1(-R)-PDSCH. DCI format 1_0 with CRC scrambled by SI-RNTI.
- SIB1(-R)-PDCCH: PDCCH transmitting SIB1(-R)-DCI
- FDRA: Frequency Domain Resource Allocation
- TDRA: Time Domain Resource Allocation
- RA: Random Access
- MSGA: preamble and payload transmissions of the random access procedure for 2-step RA type.
- MSGB: response to MSGA in the 2-step random access procedure. MSGB may consist of response(s) for contention resolution, fallback indication(s), and backoff indication.
- RO (RACH Occasion) for RO-N: normal UE 4-step RACH and 2-step RACH (if configured)
- RO-N1, RO-N2: When a separate RO is set for normal UE 2-step RACH, it is distinguished as RO-N1 (4-step) and RO-N2 (2-step).
- RO-R: RO (RACH Occasion) set separately from RO-N for redcap UE 4-step RACH and 2-step RACH(if configured)
- RO-R1, RO-R2: When a separate RO is set for redcap UE 2-step RACH, it is distinguished as RO-R1 (4-step) and RO-R2 (2-step).
- PG-R: MsgA-Preambles Group for redcap UEs
- RAR: Randoma Access Response
- RAR window: the time window to monitor RA response(s)
- FH: Frequency Hopping
- iBWP: initial BWP
- iBWP-DL(-UL): initial DL(UL) BWP
- iBWP-DL(-UL)-R: (separate) initial DL(UL) BWP for RedCap
- CS: Cyclic shift
- NB: Narrowband

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, proposals and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, proposals and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

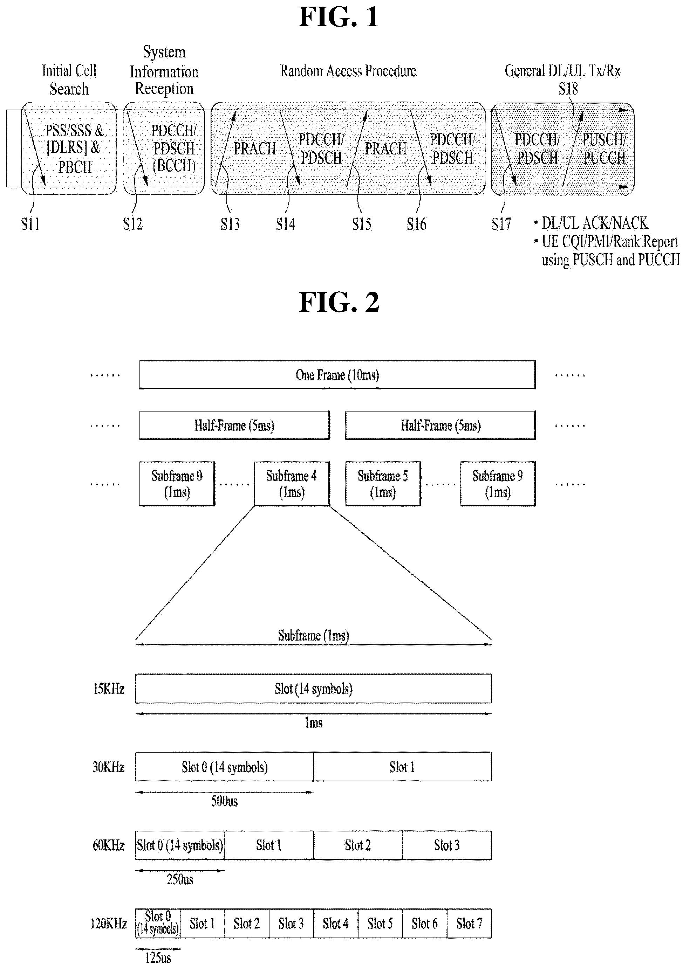

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

The SSB is composed of four consecutive OFDM symbols, each carrying the PSS, the PBCH, the SSS/PBCH, or the PBCH. Each of the PSS and the SSS includes one OFDM symbol by 127 subcarriers, and the PBCH includes three OFDM symbols by 576 subcarriers. The PBCH is encoded/decoded based on Polar codes, and modulation/demodulation is performed thereon according to quadrature phase shift keying (QPSK). The PBCH in the OFDM symbol consists of data resource elements (REs) to which a complex modulation value of the PBCH is mapped, and demodulation reference signal (DMRS) REs to which a DMRS for the PBCH is mapped. Three DMRS REs are configured for each RB in the OFDM symbol, and three data REs configured between DMRS REs.

The PSS may be used in detecting a cell ID within a cell ID group, and the SSS may be used in detecting a cell ID group. The PBCH may be used in detecting an SSB (time) index and a half-frame. There are 336 cell ID groups, and each cell ID group includes three cell IDs. Thus, there are a total of 1008 cell IDs.

SSBs are periodically transmitted with an SSB periodicity. A default SSB periodicity assumed by the UE in initial cell search is defined as 20 ms. After cell access, the SSB periodicity may be set to one of {5 ms, 10 ms, 20 ms, 40 ms, 80 ms, and 160 ms} by the network (e.g., BS). An SSB burst set may be configured at the beginning of the SSB periodicity. The SSB burst set may be set to a time window of 5 ms (i.e., half-frame), and the SSB may be repeatedly transmitted up to L times within the SS burst set. The maximum number of SSB transmissions L may be given depending carrier frequency bands as follows. One slot includes up to two SSBs.
- For frequency range up to 3 GHz, L = 4
- For frequency range from 3GHz to 6 GHz, L = 8
- For frequency range from 6 GHz to 52.6 GHz, L = 64

The time-domain positions of candidate SSBs in the SS burst set may be defined depending on subcarrier spacings. The time-domain positions of the candidate SSBs are indexed from (SSB indices) 0 to L-1 in temporal order within the SSB burst set (i.e., half-frame).

Multiple SSBs may be transmitted within the frequency span of a carrier. Each SSB may not need to have a unique physical layer cell identifier, but different SSBs may have different physical layer cell identifiers.

The UE may acquire DL synchronization by detecting the SSB. The UE may identify the structure of the SSB burst set based on the detected SSB (time) index, and thus the UE may detect a symbol/slot/half-frame boundary. A frame/half-frame number to which the detected SSB belongs may be identified based on system frame number (SFN) information and half-frame indication information.

Specifically, the UE may obtain a 10-bit SFN for a frame to which a PBCH belongs from the PBCH. Then, the UE may obtain 1-bit half- frame indication information. For example, when the UE detects the PBCH in which the half-frame indication bit is set to 0, the UE may determine that an SSB to which the PBCH belongs is included in the first half-frame of the frame. When the UE detects the PBCH in which the half-frame indication bit is set to 1, the UE may determine that an SSB to which the PBCH belongs is included in the second half-frame of the frame. Finally, the UE may obtain the SSB index of the SSB to which the PBCH belongs based on a DMRS sequence and a PBCH payload carried by the PBCH.

After initial cell search, the UE may acquire more specific system information by receiving a physical downlink control channel (PDCCH) and receiving a physical downlink shared channel (PDSCH) based on information of the PDCCH in step S102.

System information (SI) is divided into a master information block (MIB) and a plurality of system information blocks (SIBs). The SI except for the MIB may be referred to as remaining minimum system information (RMSI). Details thereof will be described in the following.
- The MIB includes information/parameters for monitoring a PDCCH scheduling a PDSCH carrying SIB1 (SystemInformationBlock1), and the MIB is transmitted by the BS over the PBCH of an SSB. For example, the UE may check based on the MIB whether there is a CORESET for a Type0-PDCCH common search space. The Type0-PDCCH common search space is a kind of PDCCH search space, which is used to transmit a PDCCH scheduling an SI message. If the Type0-PDCCH common search space exists, the UE may determine (1) a plurality of contiguous RBs and one or more consecutive symbols included in the CORESET and (ii) a PDCCH occasion (e.g., a time-domain location for PDCCH reception, based on information (e.g., pdcch-ConfigSIB1) in the MIB. If the Type0-PDCCH common search space does not exist, pdcch-ConfigSIB1 provides information on a frequency location at which the SSB/SIB1 exists and information on a frequency range where there are no SSB/SIB1.
- SIB1 includes information related to availability and scheduling (e.g., transmission periodicity, SI-window size, etc.) of the remaining SIBs (hereinafter referred to as SIBx where x is an integer more than or equal to 2). For example, SIB1 may indicate whether SIBx is periodically broadcast or provided at the request of the UE in an on-demand manner. When SIBx is provided in an on-demand manner, SIB1 may include information necessary for the UE to send an SI request. SIB1 is transmitted over a PDSCH, and a PDCCH scheduling SIB1 is transmitted in the Type0-PDCCH common search space. That is, SIB1 is transmitted over the PDSCH indicated by the PDCCH.
- SIBx is included in the SI message and transmitted on the PDSCH. Each SI message is transmitted within a periodically occurring time window (i.e., SI-window).

The UE may perform a random access procedure (e.g., 4-step RA procedure) to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

Hereinafter, a 2-step random access procedure will be described in brief. In the 2-step random access procedure, S103/S105 may be performed in one step (where the UE performs transmission) (message A), and S104/S106 may be performed in one step (where the BS performs transmission) (message B). Message A (MsgA) may include a preamble and a payload (PUSCH payload), and the preamble and payload may be multiplexed based on time division multiplexing (TDM). In response to MsgA, message B (MsgB) may be transmitted for contention resolution, fallback indication(s), and/or backoff indication. The 2-step random access procedure may be subdivided into a contention-based random access (CBRA) procedure and a contention-free random access (CFRA) procedure. In the CFRA procedure, the BS may provide the UE with information on a preamble that the UE needs to transmit in MsgA and information on PUSCH allocation before the UE transmits MsgA.

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

The MR system may support signal transmission/reception in unlicensed bands. According to regional regulations for unlicensed bands, a communication node in an unlicensed band needs to determine whether a channel is used by other communication node(s) before transmitting a signal. Specifically, the communication node may perform carrier sensing (CS) before transmitting the signal so as to check whether the other communication node(s) perform signal transmission. When it is determined that the other communication node(s) perform no signal transmission, it is said that clear channel assessment (CCA) is confirmed. When a CCA threshold is predefined or configured by higher layer signaling (e.g., RRC signaling), the communication node may determine that the channel is busy if the detected channel energy is higher than the CCA threshold. Otherwise, the communication node may determine that the channel is idle. When it is determined that the channel is idle, the communication node may start the signal transmission in a UCell. The sires of processes described above may be referred to as Listen-Before-Talk (LBT) or a channel access procedure (CAP). The LBT and CAP may be interchangeably used in this document.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^u) | N^{slot}_{symb} | N^{frame,u}ₛₗₒₜ | N^{subtrame,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: Number of symbols in a slot * N^{frame,u}ₛₗₒₜ: Number of slots in a frame * N^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT- s-OFDM) symbol).

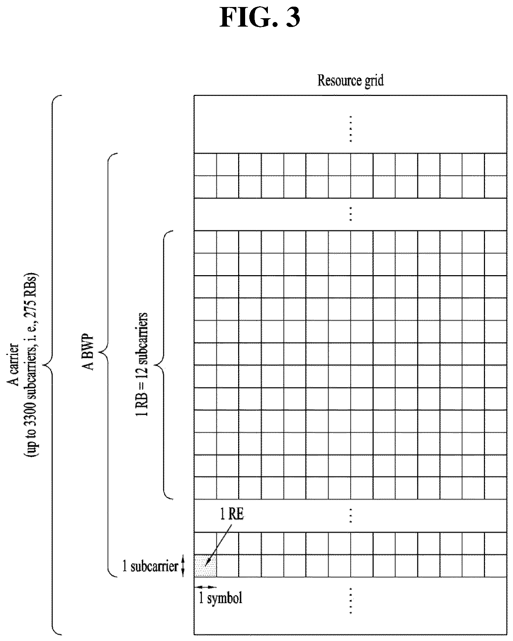

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

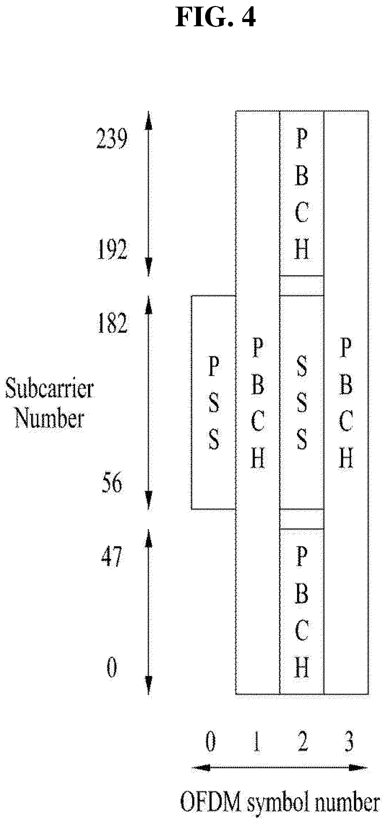

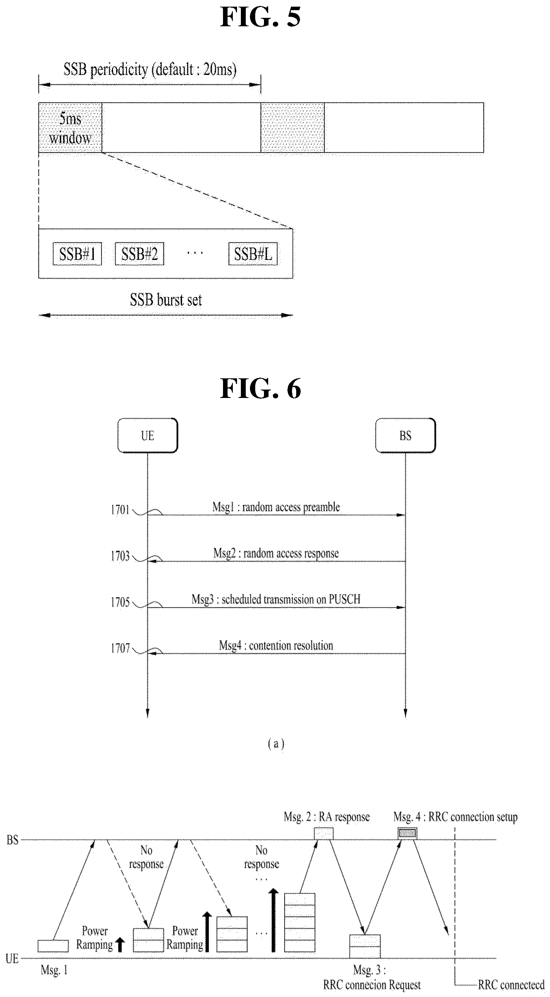

FIG. 4 and 5 are drawings for explaining the structure and transmission method of an SSB (Synchronization Signal Block).

The UE may perform cell search, system information acquisition, beam alignment for initial access, DL measurement, and the like based on the SSB. Terms SSB the synchronization signal/physical broadcast channel (SS/PBCH) block will be interchangeably used.

Referring to FIG. 4, the SSB includes a PSS, an SSS, and a PBCH. The SSB includes four consecutive OFDM symbols, and the PSS, the PBCH, the SSS/PBCH, and the PBCH are transmitted in the respective OFDM symbols. Each of the PSS and the SSS includes one OFDM symbol by 127 subcarriers, and the PBCH includes three OFDM symbols by 576 subcarriers. Polar coding and QPSK are applied to the PBCH. The PBCH includes data REs and demodulation reference signal (DMRS) REs in every OFDM symbol. There are three DMRS REs per RB, with three data REs between every two adjacent DMRS REs.

Cell search is a process of acquiring time/frequency synchronization with a cell and detecting the identifier (ID) (e.g., physical cell ID (PCID)) of the cell. The PSS is used to detect a cell ID in a cell ID group, and the SSS is used to detect the cell ID group. The PBCH is used to detect an SSB (time) index and a half-frame.

The cell search process of the UE may be summarized in Table 3.

**[Table 3]**

| | Type of Signals | Operations |
|---|---|---|
| 1^{st} Step | PSS | *SS/PBCH block (SSB) symbol timing acquisition* Cell ID detection within a cell ID group (3 hypothesis) |
| 2^{nd} Step | SSS | Cell ID group detection (336 hypothesis) |
| 3^{rd} Step | PBCH DMRS | * SSB index and Half frame (HF) index (Slot and frame boundary detection) |
| 4^{th} Step | PBCH | * Time information (80ms, System Frame Number (SFN), SSB index, HF)* Remaining Minimum System Information (RMSI) Control resource set (CORESET)/Search Space configuration) |
| 5^{th} Step | PDCCH and PDSCH | * Cell access information* RACH configuration |

There may be 336 cell ID groups, each including three cell IDs. There may be 1008 cell IDs in total. Information about a cell ID group to which the cell ID of a cell belongs may be provided/obtained through the SSS of the cell, and information about the cell ID among 336 cells in the cell ID may be provided/obtained through the PSS.

Referring to FIG. 6, an SSB is periodically transmitted according to an SSB periodicity. A basic SSB periodicity assumed by the UE in the initial cell search is defined as 20ms. After cell access, the SSB periodicity may be set to one of {5ms, 10ms, 20ms, 40ms, 80ms, 160ms} by the network (e.g., the BS). An SSB burst set is configured at the beginning of an SSB period. The SSB burst set may be configured in a 5-ms time window (i.e., half-frame), and an SSB may be repeatedly transmitted up to L times within the SS burst set. The maximum number L of transmissions of the SSB may be given according to the frequency band of a carrier as follows. One slot includes up to two SSBs.
- For frequency range up to 3 GHz, L = 4
   - For frequency range from 3GHz to 6 GHz, L = 8
   - For frequency range from 6 GHz to 52.6 GHz, L = 64

The time position of an SSB candidate in the SS burst set may be defined according to an SCS as follows. The time positions of SSB candidates are indexed as (SSB indexes) 0 to L-1 in temporal order within the SSB burst set (i.e., half-frame).
- Case A: 15-kHz SCS: The indexes of the first symbols of candidate SSBs are given as {2, 8} + 14*n where n=0, 1 for a carrier frequency equal to or lower than 3GHz, and n=0, 1, 2, 3 for a carrier frequency of 3GHz to 6GHz.
- Case B: 30-kHz SCS: The indexes of the first symbols of candidate SSBs are given as {4, 8, 16, 20} + 28*n where n =0 for a carrier frequency equal to or lower than 3GHz, and n=0, 1 for a carrier frequency of 3GHz to 6GHz.
- Case C: 30-kHz SCS: The indexes of the first symbols of candidate SSBs are given as {2, 8} + 14*n where n=0, 1 for a carrier frequency equal to or lower than 3GHz, and n=0, 1, 2, 3 for a carrier frequency of 3GHz to 6GHz.
- Case D: 120-kHz SCS: The indexes of the first symbols of candidate SSBs are given as {4, 8, 16, 20} + 28*n where n=0, 1, 2, 3, 5, 6, 7, 8, 10, 11, 12, 13, 15, 16, 17, 18 for a carrier frequency above 6GHz.
- Case E: 240-kHz SCS: The indexes of the first symbols of candidate SSBs are given as {8, 12, 16, 20, 32, 36, 40, 44} + 56*n where n=0, 1, 2, 3, 5, 6, 7, 8 for a carrier frequency above 6GHz.

### Bandwidth part (BWP)

The NR system may support up to 400 MHz for each carrier. The network may instruct the UE to operate only in a partial bandwidth rather than the whole bandwidth of such a wideband carrier. The partial bandwidth is referred to as a BWP. The BWP refers to a subset of contiguous common RBs defined for a numerology in the BWP of a carrier in the frequency domain, and one numerology (e.g., SCS, CP length, slot/mini-slot duration, etc.) may be configured.

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signaling, etc.). The BS may instruct the UE to switch to another configured DL/UL BWP (through L1 signaling, MAC CE or RRC signaling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

FIG. 6 illustrates an exemplary normal random access procedure. Specifically, FIG. 6 shows a contention-based random access procedure of the UE, which is performed in four steps.

First, the UE may transmit message 1 (Msg1) including a random access preamble on a PRACH (see 1701 of FIG. 6(a)).

Random access preamble sequences with different lengths may be supported. A long sequence length of 839 may be applied to SCSs of 1.25 and 5 kHz, and a short sequence length of 139 may be applied to SCSs of 15, 30, 60, and 120 kHz.

Multiple preamble formats may be defined by one or more RACH OFDM symbols and different CPs (and/or guard times). A RACH configuration for a cell may be included in SI about the cell and provided to the UE. The RACH configuration may include information on the SCS of the PRACH, available preambles, preamble formats, and so on. The RACH configuration may include information about association between SSBs and RACH (time-frequency) resources. The UE transmits a random access preamble on a RACH time-frequency resource associated with a detected or selected SSB.

The threshold of an SSB for RACH resource association may be configured by the network, and a RACH preamble may be transmitted or retransmitted based on an SSB where reference signal received power (RSRP), which is measured based on the SSB, satisfies the threshold. For example, the UE may select one SSB from among SSBs that satisfy the threshold and transmit or retransmit the RACH preamble based on a RACH resource associated with the selected SSB.

Upon receiving the random access preamble from the UE, the BS may transmit message 2 (Msg2) corresponding to a random access response (RAR) message to the UE (see 1703 of FIG. 6(a)). A PDCCH scheduling a PDSCH carrying the RAR may be CRC masked with a random access (RA) radio network temporary identifier (RNTI) (RA-RNTI) and then transmitted. Upon detecting the PDCCH masked by the RA-RNTI, the UE may obtain the RAR from the PDSCH scheduled by DCI carried by the PDCCH. The UE may check whether the RAR includes RAR information in response to the preamble transmitted by the UE, i.e., Msg1. The presence or absence of the RAR information in response to Msg1 transmitted by the UE may be determined depending on whether there is a random access preamble ID for the preamble transmitted by the UE. If there is no response to Msg1, the UE may retransmit the RACH preamble within a predetermined number of times while performing power ramping. The UE may calculate PRACH transmit power for retransmitting the preamble based on the most recent path loss and power ramping counter.

The RAR information transmitted on the PDSCH may include timing advance (TA) information for UL synchronization, an initial UL grant, and a temporary cell-RNTI (C-RNTI). The TA information may be used to control a UL signal transmission timing. The UE may transmit a UL signal over a UL shared channel as message 3 (Msg3) of the random access procedure based on the RAR information (see 1705 of FIG. 6(a)). Msg3 may include an RRC connection request and a UE identifier. In response to Msg3, the network may transmit message 4 (Msg4), which may be treated as a contention resolution message on DL (see 1707 of FIG. 6(a)). Upon receiving Msg4, the UE may enter the RRC_CONNECTED state.

On the other hand, a contention-free random access procedure may be performed when the UE is handed over to another cell or BS or when it is requested by the BS. In the contention-free random access procedure, a preamble to be used by the UE (hereinafter referred to as a dedicated random access preamble) is allocated by the BS. Information on the dedicated random access preamble may be included in an RRC message (e.g., handover command) or provided to the UE through a PDCCH order. When the random access procedure is initiated, the UE may transmit the dedicated random access preamble to the BS. When the UE receives an RAR from the BS, the random access procedure is completed.

As described above, a UL grant in the RAR may schedule PUSCH transmission to the UE. A PUSCH carrying initial UL transmission based on the UL grant in the RAR is referred to as an Msg3 PUSCH. The content of an RAR UL grant may start at the MSB and end at the LSB, and the content may be given as shown in Table 4.

**[Table 4]**

| RAR UL grant field | Number of bits |
|---|---|
| Frequency hopping flag | 1 |
| Msg3 PUSCH frequency resource allocation | 12 |
| Msg3 PUSCH time resource allocation | 4 |
| Modulation and coding scheme (MCS) | 4 |
| Transmit power control (TPC) for Msg3 PUSCH | 3 |
| CSI request | 1 |

In a contention-free random access (CFRA) procedure, the CSI request field in the RAR UL grant indicates whether the terminal includes aperiodic CSI reporting in the corresponding PUSCH transmission. a subcarrier spacing for Msg3 PUSCH transmission is provided by the RRC parameter. The terminal may transmit PRACH and Msg3 PUSCH on the same uplink carrier in the same service providing cell. A UL BWP for Msg3 PUSCH transmission is indicated by SystemInformationBlock1 (SIB1).

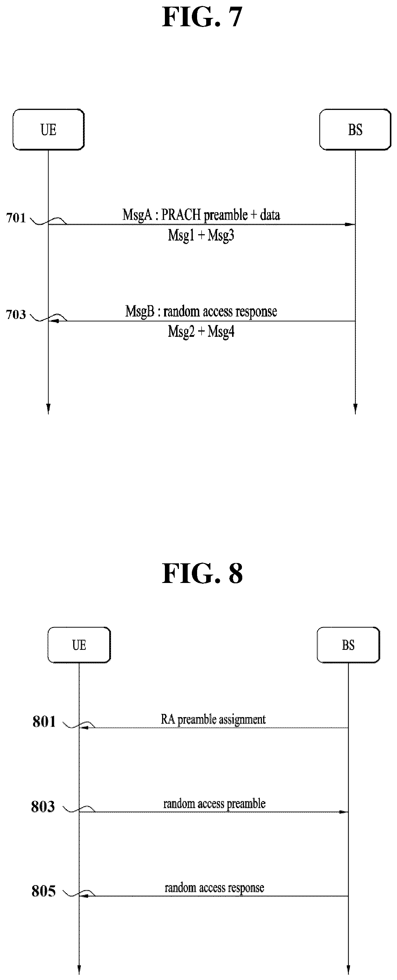

FIG. 7 is a diagram illustrating an exemplary 2-step RACH procedure to which various embodiments of the present disclosure are applicable.

A (contention-based) RACH procedure performed in two steps, that is, a 2-step RACH procedure has been proposed to simplify the RACH procedure and thus achieve low signaling overhead and low latency.

In the 2-step RACH procedure, the operation of transmitting Msg 1 and the operation of transmitting Msg 3 in the 4-step RACH procedure may be incorporated into an operation of transmitting one message, Message A (Msg A) including a PRACH and a PUSCH by the UE. The operation of transmitting Msg 2 by the BS and the operation of transmitting Msg 4 by the BS in the 4-step RACH procedure may be incorporated into an operation of transmitting one message, Message B (Msg B) including an RAR and contention resolution information.

That is, in the 2-step RACH procedure, the UE may combine Msg 1 and Msg 3 of the 4-step RACH procedure into one message (e.g., Msg A) and transmit the message to the BS (1301).

Further, in the 2-step RACH procedure, the BS may combine Msg 2 and Msg 4 of the 4-step RACH procedure into one message (e.g., Msg B) and transmit the message to the UE (1303).

The 2-step RACH procedure may become a low-latency RACH procedure based on the combinations of these messages.

More specifically, Msg A may include a PRACH preamble included in Msg 1 and data included in Msg 3 in the 2-step RACH procedure. In the 2-step RACH procedure, Msg B may include an RAR included in Msg 2 and contention resolution information included in Msg 4.

### Contention-Free RACH Procedure

FIG. 8 is a diagram illustrating an exemplary contention-free RACH procedure to which various embodiments of the present disclosure are applicable.

The contention-free RACH procedure may be used for handover of the UE to another cell or BS or may be performed when requested by a BS command. The contention-free RACH procedure is basically similar to the contention-based RACH procedure. However, compared to the contention-based RACH procedure in which a preamble to be used is randomly selected from among a plurality of RACH preambles, a preamble to be used by the UE (referred to as a dedicated RACH preamble) is assigned to the UE by the BS in the contention-free RACH procedure (801). Information about the dedicated RACH preamble may be included in an RRC message (e.g., a handover command) or provided to the UE by a PDCCH order. When the RACH procedure starts, the UE transmits the dedicated RACH preamble to the BS (803). When the UE receives an RAR from the BS, the RACH procedure is completed (805).

In the contention-free RACH procedure, a CSI request field in an RAR UL grant indicates whether the UE is to include an aperiodic CSI report in a corresponding PUSCH transmission. An SCS for Msg 3 PUSCH transmission is provided by an RRC parameter. The UE may transmit the PRACH and the Msg 3 PUSCH on the same UL carrier of the same serving cell. A UL BWP for the Msg 3 PUSCH transmission is indicated by SIB1.

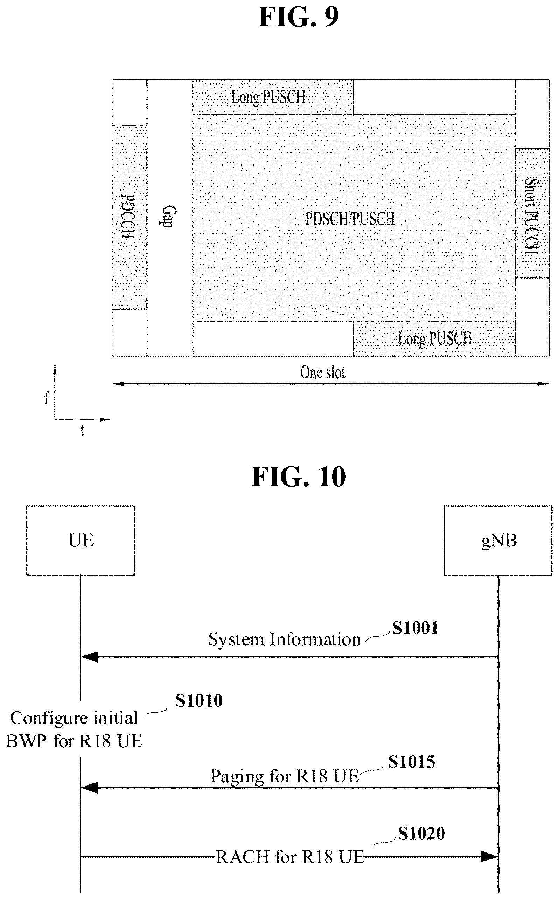

FIG. 9 illustrates exemplary mapping of physical channels in a slot.

Referring to FIG. 9, a PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to anAL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.
- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

* An occasion (e.g., time/frequency resources) in which the UE is to monitor PDCCH candidates is defined as a PDCCH (monitoring) occasion. One or more PDCCH (monitoring) occasions may be configured in a slot.

Table 5 shows the characteristics of each SS.

**[Table 5]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI. TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 6 shows DCI formats transmitted on the PDCCH.

**[Table 6]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.
- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

In NR, one or more SPS PDSCHs may be configured for a UE for periodic transmission and reception or for low latency and PDCCH overhead. Each SPS configuration may have a cycle and may repeat configured/indicated resources. That is, an initially configured/indicated resource allocation may be repeated at the configured cycle, and the UE may perform downlink reception without a separate PDCCH reception process on the corresponding resource. The types of data to be generated in XR are diverse. Among these data, it is considered that information about a sensor and location of a UE and video data, which are generally reported at a specific cycle, are transmitted and received from an SPS resource. These data may not always have a constant traffic arrival time and may experience jitter due to reasons such as video encoding time, sensor measurement time, upper layer operation, or routing changes in a network through which the data is transferred.

When resources are allocated to a location sufficiently distant in time from an expected traffic occurrence time in consideration of jitter, and the like, resource availability may be ensured, but delays may occur. Conversely, when SPS resources with fixed cycles are allocated at the expected data generating time, greater delays may occur due to a waiting time until a next available resource when jitter occurs.

Some data are generated based on events, and thus it is impossible to accurately determine actual data generating time, but it may be considered that SPS resources are used for the data to reduce the delay time caused by scheduling. In this case, skipping methods n which sufficient resources are allocated in a short cycle to prepare for data generating and a UE or a BS selectively uses these resources while not actually using other resources have been discussed in the past. However, to use the skipping method of transmission and reception, it is necessary to carefully consider response signals between the UE and the BS to determine whether to receive and transmit data. When the UE transmits a response signal even for a transmission that has not been received, the BS needs to always prepare resources for the UE to transmit a response signal, and considering that the skipping method is based on configuration of sufficient resources within radio resources for these resources, this may act as a large uplink burden. Considering that these resources may be multiplexed between UEs, a burden of UL resources needs to be considered more importantly.

Ensuring low latency is required for the quality of XR services, and thus it is necessary to consider a method of minimizing an impact of latency while reducing the impact of jitter. To resolve this problem, the present disclosure relates to a method of selectively using some of a plurality of SPS resources configured between a UE and a BS and transmitting a response to the SPS resources used as such in a simplified manner to a predetermined location.

Even though the proposed method is described based on DL SPS radio resources that are configured semi-statically, it may be understood by those of skilled in the art that the method may be extended and applied to radio resources allocated through dynamic scheduling received by a UE. For example, a method of determining a single HARQ-ACK timing for a plurality of DL radio resources to which a UE is allocated may be applied regardless of a SPS PDSCH and PDSCH indicated by dynamic scheduling. It is obvious that the method may be applied to all types of transmission and reception methods expected by a BS and a UE as long as the principles of the disclosure are not violated. For convenience of descriptions, in the following disclosure, an SPS is used as a general concept to collectively refer to radio resources (e.g., DL/UL SPS, CG) that are set semi-statically.

Hereinafter, a transmission occasion (TO) means a radio resource configured for SPS purposes (e.g., SPS PDSCH). An entity performing transmission at a TO (i.e., a BS for DL or a UE for UL) may attempt to transmit at the TO, and a receiver (i.e., a UE for DL or a BS for UL) may expect transmission at each TO and attempt reception.

Hereinafter, examples are given based on an NR system to explain the principles of the disclosure, but the proposed methods do not specifically limit the transmission and reception form of NR unless otherwise specified. Hereinafter, examples are given based on the characteristics and structure of XR services to explain the principles of the disclosure, but the following methods do not specifically limit supporting XR services unless otherwise specified. Therefore, it is obvious that the present disclosure may be applied to all wireless communication transmission and reception structures and services as long as the principles of the disclosure are not violated, even without separate explanation.

### Narrower DL BWP for System Information and Paging

In addition to the recent 5G main use cases (mMTC, eMBB, and URLLC), the importance/interest in use case areas spanning mMTC and eMBB, or mMTC and URLLC, has increased. These use cases may include connected industries, smart cities, and wearables. To support the use cases more efficiently in terms of terminal cost/complexity, and power consumption in a wireless communication system, a new type of terminal that is distinct from the conventional NR terminal has been introduced. This new type of terminal is called Reduced Capability NR terminal (hereinafter referred to as RedCap UE/terminal, or RedCap), and to distinguish the new type of terminal from the conventional NR terminal, the existing NR terminal is called non-RedCap UE/terminal, or non-RedCap. The RedCap terminal is more inexpensive and has lower power consumption than the non-RedCap terminal, and in detail, may have all or some of the following features.
A. Complexity reduction related features:
   - Reduced maximum UE Bandwidth
   - Reduced number of UE RX/TX branches/antennas
   - Half-Duplex-FDD
   - Relaxed UE processing time
   - Relaxed UE processing capability
B. Power saving related features:
   - Extended DRX for RRC inactive and/or idle
   - RRM relaxation for stationary devices

Target use cases for the Redcap terminal with the features may include:
1) Connected industries
   - Sensors and actuators connected to 5G network and core
   - massive Industrial Wireless Sensor Network (IWSN)
   - Relatively low-cost service that requires small device form factor with battery life of several years, as well as URLLC service with very high requirements.
   - The requirements for this service are higher than Low Power Wide Area (LPWA) (i.e., LTE-M/NB-IOT) but lower than URLCC and eMBB.
   - Pressure sensor, humidity sensor, thermometer, motion sensor, accelerometer, actuator, and the like
2) Smart City
   - Data collection and processing to monitor and control urban resources more efficiently and provide services
   - Necessary surveillance camera for smart city as well as factory and industrial complex
3) Wearables
   - Smart watch, ring, eHealth related device, medical monitoring device, and the like
   - Small device, and the like

The RedCap UE may have lower transmit and receive performance than the non-RedCap terminal. The main cause is decrease in frequency diversity performance due to a decrease in terminal bandwidth, and decrease in performance may become greater as a supported terminal bandwidth decreases.

Considering RedCap main use cases such as wearables and massive wireless sensors, massive connections need to be supported through a narrow bandwidth, and thus traffic congestion problems are expected.

To resolve the problems, a method that supports terminal frequency hopping (hereinafter FH) and traffic offloading (hereinafter TO) is proposed.

In this specification, '()' may be interpreted both as excluding the contents within () and as including the contents within the parentheses. In this specification, '/' may mean including all of the contents separated by / (and) or including only some of the separated contents (or).

### plurality of RedCap UE types and BWP modes

The following different RedCap UE types are supported in this specification. In particular, at least the following two types are supported.
(1) Rel.17 RedCap UE (hereinafter, Rel.17 R-UE): Rel.17 R-UE supporting BWP of 20 MHz
(2) Rel.18 RedCap UE (hereinafter, Rel.18 R-UE): Rel.18 R-UE supporting BWP of 5 MHz (or sub-BWP of 5 MHz or BW location of 5 MHz).

1) Option BW1: Both RF and BaseBand (BB) bandwidths of UE support 5 MHz for UL/DL.
2) Option BW2: The UE supports BB bandwidth of 5 MHz and RF bandwidth of 20 MHz for all UL/DL signals/channels.
3) Option BW3: Only BB bandwidth of 5 MHz is supported for PDSCH (unicast/broadcast PDSCH) and PUSCH, and RF bandwidth of 20 MHz is supported for UL/DL. However, up to UE RF of 20 MHz+BB bandwidth is supported for other physical channels and signals.

In this specification, Rel.18 PDSCH or DCI may mean PDSCH or DCI for Rel.18 R-UE. Rel-17 PDSCH or legacy PDSCH or pre-Rel. 18 PDSCH may mean a PDSCH for a Rel. 17 R-UE or a non-RedCap UE regardless of release, and Rel-17 DCI or legacy DCI or pre-Rel. 18 DCI may mean DCI for an Rel. 17 R-UE or a non-RedCap UE regardless of release.

In this specification, the BWP for Rel.18 R-UE may be replaced by a sub-BWP or a BW location, and may have a size of 5 MHz or less.

FIG. 10 shows a flow of a signal transmission and reception method according to one embodiment.

Referring to FIG. 10, the UE may receive system information (1005). The UE may configure an initial BWP (1010). The UE may receive a paging signal from a BS (1015) and perform a RACH procedure for initial access from the BS (1020).

In detail, the UE may usually configure/activate one initial BWP when in RRC_IDLE or RRC_INACTIVE state, and perform the initial access procedure/process through the initial BWP in the activated state. For the R18 RedCap UE, the BS may allocate a PDSCH by dividing the initial BWP for a normal UE and/or the R17-initial BWP for the R17 RedCap UE into N BWPs of 5 MHz. For example, when an R18 RedCap UE is capable of only receiving PDSCH transmissions up to 5 MHz, an initial BWP of 20 MHz may be divided into N sub-BWPs of 5 MHz and Rel-18 PDSCH(s) may be transmitted through one or more specific sub-BWPs of 5 MHz of the initial BWP of 20 MHz for system information transmission and/or paging transmission.

The R18 RedCap UE may be explicitly configured with a plurality of sub-BWPs of 5 MHz separated within an initial BWP of 20 MHz or an initial BWP for a normal UE, or may be allocated a frequency resource corresponding to a sub-BWP (hereinafter, bandwidth) of 5 MHz within an initial BWP of 20 MHz or the initial BWP for the normal UE without explicitly separated configuration for a plurality of sub-BWPs of 5 MHz. Hereinafter, for convenience of explanation, it is assumed that the R18 RedCap UE is configured with a plurality of sub-BWPs of 5 MHz separated within a specific BWP, but the present disclosure is not limited thereto, and it may also be applied to a case in which a sub-BWP 5 MHz or a frequency bandwidth of 5 MHz is indicated through a resource allocation method without explicitly separated configuration.

### Method of configuring one or more sub-BWPs

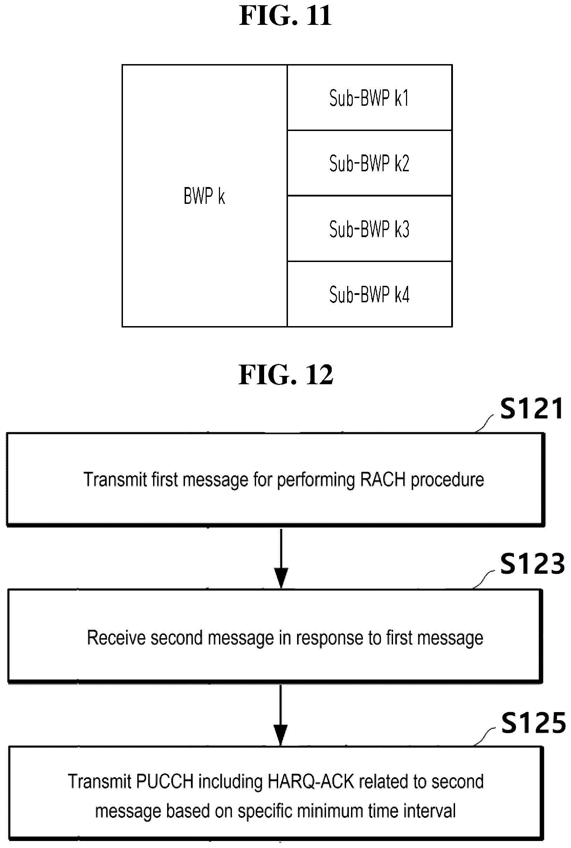

FIG. 11 is a diagram for explaining a method of configuring a plurality of sub-BWPs in one BWP.

Referring to FIG. 11, a UE in RRC_CONNECTED state may have up to four UE-dedicated BWPs (or sub-BWPs) configured for one BWP. In this case, the UE may activate only one sub-BWP from among the four sub-BWPs. For example, a BS may configure up to N sub-BWPs for a specific BWP k for a UE. (N =1, 2, 3, 4...). In this case, the sub-BWPs may be configured to not overlap each other (non-overlapped sub-BWPs) as shown in FIG. 9, or may be configured to overlap in entirely/partially.

For example, when the one BWP is a BWP of 8 MHz, the sub-BWPs may be configured as a sub-BWP of 5 MHz and a sub-BWP of 3 MHz not to overlap each other within 8 MHz. Alternatively, the sub-BWPs may be configured as a sub-BWP of 4 Mhz and a sub-BWP of 4 Mhz that do not overlap each other within a BWP of 8 Mhz, or as a sub-BWP of 5 Mhz and a sub-BWP of 5 Mhz that partially overlap each other. In this case, each sub-BWP may be configured in the following method.
(1) Method 1: A BS may indicate a starting PRB and the number of PRBs (consecutive PRBs) for each sub-BWP. The starting PRB of a sub-BWP may be indicated/configured via a relative offset to the starting PRB of a specific BWP connected to the sub-BWP.
(2) Method 2: ABS may configure sub-BWPs according to a value of N by indicating the number of sub-BWPs N for a specific BWP. When M PRBs constituting a specific BWP are divided into N sub-BWPs, each sub-BWP may be configured to include PRBs equal to the Ceiling (M/N) or Floor (M/N) value.
   - For example, each sub-BWP may include PRBs corresponding to the number of PRBs calculated based on Ceiling (M/N). For example, when M = 5 and N = 2, Ceiling (M/N) = 3, and thus each sub-BWP includes three PRBs, and from among five PRBs of a specific BWP, the lower three PRBs (i.e., the three PRBs with relatively low PRB indices) are allocated to the first sub-BWP, and the upper three PRBs (i.e., the three PRBs with relatively high PRB indices) are allocated to the second sub-BWP. In this case, the third PRB of the specific BWP may be configured as a frequency resource in which two sub-BWPs overlap each other.
   - Each sub-BWP may include PRBs corresponding to the number of PRBs calculated based on Floor (M/N). For example, when M = 5 and N = 2, Floor (M/N) = 2, and thus each sub-BWP includes two PRBs, and from among five PRBs of a specific BWP, the lower two PRBs (i.e., the two PRBs with relatively low PRB indices) are allocated to the first sub-BWP, and the upper two PRBs (i.e., the two PRBs with relatively high PRB indices) are allocated to the second sub-BWP. In this case, the third PRB of the specific BWP may be configured as a guard frequency resource (or guard band) that does not belong to any sub-BWP.

For example, when two or more sub-BWPs are configured for a specific BWP, a specific sub-BWP from among the two or more sub-BWPs may be determined/indicated as a first active sub-BWP (or default sub-BWP, initial sub-BWP, default BW location, or associated sub-BWP) through an RRC message (or, MAC CE, or DCI). Here, the specific BWP and the specific sub-BWP may be a specific BWP and/or a specific sub-BWP for DL and/or UL. As such, when the first active sub-BWP for a specific BWP of a specific cell is configured, the UE may activate/configure the first active sub-BWP of the specific BWP or switch to the first active sub-BWP of the specific BWP. Then, the UE may transmit a PUSCH in the first active sub-BWP indicated/configured for a specific UL BWP and receive a PDCCH and/or a PDSCH in the first active sub-BWP indicated/configured for a specific DL BWP.

### PDSCH processing/HARQ feedback time relaxation method during initial access

An RRC_IDLE or RRC_INACTIVE UE may transition to RRC_CONNECTED mode through an initial access procedure. Alternatively, when performing an RRC re-establishment process such as RLF, the UE may perform an initial connection procedure. Alternatively, the UE may perform an initial access procedure to a target cell through a mobility process such as a handover. When performing a RACH procedure to perform an initial access procedure as such, the UE may first select an initial DL/UL BWP, and then perform a PRACH preamble and/or MSG3/MSGA PUSCH transmission, and receive MSG2/MSGB and/or MSG4 PDCCH/PDSCH. In this case, the R18 R-UE may be configured to a separate initial (DL/UL) BWP different from the existing UEs, and when the separate initial BWP is not configured, the initial BWP configured for the R17 R-UE may be selected. Alternatively, when there is no initial BWP configuration for the R17/18 R-UE, the R18 R-UE may select the initial BWP configured for a normal UE.

When an R18 R-UE receives a PDSCH during a RACH process, the R18 R-UE may have a longer PDSCH processing time than other normal UEs (e.g., a UE without bandwidth limitation or an R17 R-UE). Therefore, there is a need to ensure a longer PUCCH transmission slot for transmitting HARQ-ACK for PDSCH. Alternatively, an interval between reception slot of a PDSCH and transmission slot of a PUCCH for transmitting the HARQ-ACK for the PDSCH needs to be ensured longer. In consideration of this, alleviation of PDSCH processing and/or HARQ feedback time in the RACH procedure for the R18 R-UE may be required.

First, the contents related to the performance of the RACH procedure for a normal UE or an R17 R-UE are described. The normal UE or the R17 R-UE may perform 4-step RACH as shown in Table 7 below. For example, the normal UE or the R17 R-UE may transmit a PRACH based on a 4-step RACH as defined in Table 7 and perform HARQ-ACK transmission for reception of a PDSCH. In this case, the normal UE or the R17 R-UE may expect that a time interval between a last symbol of the PDSCH of the MSG4 and a first symbol of the PUCCH may not be less than a minimum time interval (NT,1+0.5 msec).

**[Table 7]**

| |
|---|
| - If requested by higher layers, the UE shall be ready to transmit a PRACH no later than *NT*,1+0.75 msec after the last symbol of the window, or the last symbol of the PDSCH reception, where *NT*,1 is a time duration of *N*1 symbols corresponding to a PDSCH processing time for UE processing capability 1 assuming *µ* corresponds to the smallest SCS configuration among the SCS configurations for the PDCCH carrying the DCI format 1_0, the corresponding PDSCH when additional PDSCH DM-RS is configured, and the corresponding PRACH. For *µ*=0, the UE assumes *N*1,0=14 [refer to TS 38.214]. |
| - minimum time between the last symbol of the PDSCH reception and the first symbol of the corresponding PUCCH transmission with the HARQ-ACK information is equal to *NT,*1+0.5 msec. *NT*,1 is a time duration of *N*1 symbols corresponding to a PDSCH processing time for UE processing capability 1 when additional PDSCH DM-RS is configured. For □□□□0, the UE assumes *N*_{1,0} = 14□[refer to TS38.214]. |
| - For DCI format 1_0, the PDSCH-to-HARQ_feedback timing indicator field values map to {1, 2, 3, 4, 5, 6, 7, 8}. |

Alternatively, the normal UE or the R17 R-UE may perform 2-step RACH. For example, the normal UE or the R17 RUE may perform transmission of a PUCCH including a HARQ-ACK for reception of an MSGB PDSCH based on an HARQ Feedback Timing Indicator field and a minimum time interval as defined in Table 8. In this case, the normal UE or the R17 R-UE may expect that a time interval between a last symbol of the MSGB PDSCH and a first symbol of the PUCCH may not be less than a minimum time interval (*NT*,1+0.5 msec).

**[Table 8]**

| |
|---|
| - a slot for the PUCCH transmission is indicated by a HARQ Feedback Timing Indicator field of 3 bits in the successRAR having a value *k* from {1, 2, 3, 4, 5, 6, 7, 8} for *µ*≤3, from {7, 8, 12, 16, 20, 24, 28, 32} for *µ*=5, and from {13, 16, 24, 32, 40, 48, 56, 64} for *µ*=6 and, with reference to slots for PUCCH transmission having duration *Tslot,* the slot is determined as *n+k*+Δ+2*^{µ}*·*K*cell,offset, where *n* is a slot of the PDSCH reception, Δ is as defined for PUSCH transmission in Table 6.1.2.1.1-5 of [6, TS 38.214], *µ* is the SCS configuration of the active UL BWP, and *K*cell,offset is provided by *CellSpecific_Koffset*; otherwise, if not provided, *K*cell,offset=0 |
| - the UE does not expect the first symbol of the PUCCH transmission to be after the last symbol of the PDSCH reception by a time smaller than *NT,1+0.5* msec where *NT,1* is the PDSCH processing time for UE processing capability 1 [6, TS 38.214] |

Based on the method of the normal UE or the R17 R-UE performing a RACH procedure, hereinafter, a method of configuring an alleviated PDSCH processing and/or HARQ feedback time for an R18 R-UE.

When the relaxed PDSCH processing and/or HARQ feedback time is required for the R18 R-UE, the R18 R-UE may report the requirement for such relaxation to the BS via RACH MSG1 or MSGA. This reporting method for requirements may not be applied to the R17 R-UE, but only to R18 R-UE.
(1) When PDSCH processing time relaxation is required for receiving MSG2 PDSCH after receiving MSG2 PDCCH in 4 step RACH

The R18 R-UE may receive the MSG2 PDSCH by applying a more relaxed PDSCH processing time (than a normal UE or R17 R UE) when the PDSCH processing time is required for receiving the MSG2 PDSCH after receiving the MSG2 PDCCH in 4 STEP RACH.
-> Option 1A: A separate N1 processing capability value may be applied for the R18 R-UE.
-> Option 1B: 0.75 msec may be extended or an additional time for *N*_{T,1}+0.75 msec may be added for a PDSCH processing time for an R18 R-UE.

For example, considering the above options, the R18 R-UE may perform reception of MSG2 PDSCH after reception of MSG2 PDCCH as shown in Table 9 below (see TS 38.214).

**[Table 9]**

| |
|---|
| If requested by higher layers, the R18 R-UE shall be ready to to transmit a PRACH no later than *NT*,1+0.75 msec + additional specific time for R18 R- UE after the last symbol of the window, or the last symbol of the PDSCH reception, where *NT*,1 is a time duration of *N*1 symbols corresponding to a PDSCH processing time for UE processing capability 1 or R18 R-UE specific processing capability, assuming *µ* corresponds to the smallest SCS configuration among the SCS configurations for the PDCCH carrying the DCI format 1_0, the corresponding PDSCH when additional PDSCH DM-RS is configured, and the corresponding PRACH. For *µ*=0, the UE assumes *N*1,0=14. |

(2) When relaxation is required for transmission of PUCCH reporting HARQ-ACK for PDSCH in RACH procedure

Alternatively, relaxation may be required for PUCCH transmission reporting HARQ-ACK for MSG4 PDSCH reception in 4-step RACH, or for PUCCH transmission reporting HARQ-ACK for MSGB PDSCH reception in 2-step RACH. These R18 R-UEs may transmit HARQ-ACK for MSG4 PDSCH or MSGB PDSCH by applying more relaxed HARQ Feedback Timing (compared to normal UE or R17 R-UE) in the following manner. In other words, during the initial access process in which the capability of the UE is unknown, the UE may not know which sub-BWP to select, and thus the R18 R-UE may receive MSGB or MSG4 for a bandwidth exceeding a bandwidth of 5 MHz (e.g., 20 MHz). In this case, the R18 R-UE may not be able to transmit HARQ-ACK for the MSGB PDSCH (or MSG4 PDSCH) within the minimum time interval required for a normal UE (i.e., without bandwidth limitation) due to its limited processing capability for PDSCH, and the like. Therefore, as described below, relaxation may be required for PUCCH transmission reporting HARQ-ACK for MSGB PDSCH (or MSG4 PDSCH) reception.

That is, the minimum time interval between the last symbol of the MSG4 PDSCH reception (or, MSGB PDSCH) and the start symbol (first symbol) of the PUCCH transmission reporting the HARQ-ACK for the R18 R-terminal may be relaxed. A detailed relaxation method may be based on at least one of the following options.
-> Option 2A: A separate N1 processing capability value may be applied for an R18 R-UE.
-> Option 2B: In the formula of '*N*_{T,1}+0.5 msec' which determines the existing minimum time interval, a specific additional time for the R18 R-UE may be added, or 0.5 ms may be extended/extended to a longer time.
   - For example, the minimum time interval for the R18 R-UE may be determined as a time corresponding to/same as *N*_{T,1}+1.5msec in case the 0.5 ms is extended/prolonged to a longer time of 1.5 ms, or may be determined as a time corresponding to *N*_{T,1}+0.5 msec+1 msec in case a specific additional time of 1 ms is added to the R18 R-UE.
   - In this case, the R18 R-UE may transmit the PUCCH when an interval between the last symbol of the PDSCH reception (reception of the PDSCH through the MSG4/MSGB) and the first symbol of the PUCCH including the HARQ-ACK information is not less than the minimum time interval for the R18 R-UE.
   - Alternatively, the R18 R-UE may have different minimum time intervals depending on the (subcarrier spacing) size of the PDSCH. For example, when the SCS size is 15 KHz, the minimum time interval may be determined/configured as *N*_{T,1}+1.5 msec, and when the SCS size is 30 KHz, the minimum time interval may be determined/configured as *N*_{T,1}+1 msec.
-> Option 2C (for 2 step RACH): A specific offset value for a separate R18 RedCap may be applied for an R18 R-UE. For example, *n+k+Δ*+2*µ·K*_{redcap_offset} may be applied.

For example, based on the options described above (in particular, Option 2B), the R18 R-UE may transmit a PUCCH reporting HARQ-ACK for MSG4 PDSCH reception based on the minimum time interval according to Table 11 below.

**[Table 11]**

| |
|---|
| minimum time between the last symbol of the PDSCH reception and the first symbol of the corresponding PUCCH transmission with the HARQ-ACK information is equal to *NT*,1+0.5 msec+ additional specific time for R18 R-UE. *NT*,1 is the a time duration of *N*1 symbols corresponding to a PDSCH processing time for UE processing capability 1 or R18 R-UE specific processing capability when additional PDSCH DM-RS is configured. For □□□□0, the UE assumes *N*_{1,0} = 14. |

That is, according to Table 11, the minimum time between the last symbol of PDSCH reception and the first symbol of the corresponding PUCCH transmission containing HARQ-ACK information may correspond to/be equal to the additional specific time for *N*_{T,1}+0.5 msec+ R18 R-UE. Here, (when additional PDSCH DM-RS is configured) *N*_{T,1} may be a duration of *N*₁ symbol corresponding to s PDSCH processing time for UE processing capability 1 or a specific processing capability of R18 R-UE.

As described above, based on the above options, the R18 R-UE may transmit a PUCCH reporting HARQ-ACK for MSGB PDSCH reception. That is, the R18 R-UE may transmit a PUCCH of HARQ-ACK for reception of the MSGB PDSCH based on the minimum time interval determined based on Options 2A to 2C above even in the 2-step RACH procedure.

Alternatively, referring to Table 12 below, a slot for PUCCH transmission may be indicated by a 3-bit HARQ Feedback Timing Indicator field included in successRAR based on a slot for PUCCH transmission with a period of *Tslot.* Here, bit values of the HARQ Feedback Timing Indicator field may be mapped to any one of the k values {1, 2, 3, 4, 5, 6, 7, 8} for *µ*≤3, any one of the k values {7, 8, 12, 16, 20, 24, 28, 32} for *µ*=5, or any one of the k values {13, 16, 24, 32, 40, 48, 56, 64} for *µ*=6. For example, a slot for PUCCH transmission may be determined as *n+k+Δ+2µ*·Kcell,offset+2*µ*·*K*_redcap_offset. *K*_redcap_offset applied to the R18 R-UE may be indicated/configured in the gNB via SIB1 or other SI or UE-specific signaling. If no separate configuration is specified, *K*_redcap_offset may be 0.

**[Table 12]**

| |
|---|
| a slot for the PUCCH transmission is indicated by a HARQ Feedback Timing Indicator field of 3 bits in the successRAR having a value *k* from {1, 2, 3, 4, 5, 6, 7, 8} for *µ*≤3, from {7, 8, 12, 16, 20, 24, 28, 32} for *µ*=5, and from {13, 16, 24, 32, 40, 48, 56, 64} for *µ*=6 and, with reference to slots for PUCCH transmission having duration *Tslot,* the slot is determined as *n*+*k*+Δ+2*µ*·*K*cell,offset+2*^{µ}*·*K*_redcap_offset, where *n* is a slot of the PDSCH reception, Δ is as defined for PUSCH transmission in Table 6.1.2.1.1-5 of [6, TS 38.214], *µ* is the SCS configuration of the active UL BWP, and Kcell,offset is provided by *CellSpecific_Koffset*; otherwise, if not provided, *K*cell,offset=0 and *K*_redcap_offset is applicable for R18 R-UE and can be configured by gNB (via SIB1 or other SI or UE dedicated signaling); otherwise, if the UE is not R18 R- UE or if not configured by gNB, *K_*redcap_offset =0. |
| -the UE does not expect the first symbol of the PUCCH transmission to be after the last symbol of the PDSCH reception by a time smaller than *NT*,1+0.5 msec + additional specific time for R18 R- UE where *NT*,1 is the PDSCH processing time for UE processing capability or R18 R- UE specific processing capability |

The R18 R-UE may not expect that a time interval between a last symbol of PDSCH reception and a first symbol of PUCCH is less than the minimum time interval (*N*_{T,1}+0.5msec + specific additional time, or, *N*_{T,1}+1.5msec or *N*_{T,1}+1.0msec) for the R18 R-UE (see Option 2B).

### (3) Relaxation (HARQ timing related) for PUCCH transmission reporting HARQ-ACK for PDSCH reception

Alternatively, relaxation may be required for PUCCH transmission reporting HARQ-ACK for MSG4 PDSCH reception in 4-step RACH, or for PUCCH transmission reporting HARQ-ACK for MSGB PDSCH reception in 2-step RACH. These R18 R-UEs may transmit HARQ-ACK for MSG4 PDSCH or MSGB PDSCH by applying more relaxed HARQ Feedback Timing (compared to normal UE or R17 R-UE) in the following manner.

In other words, during the initial access process in which the capability of the UE is unknown, the UE may not know which sub-BWP to select, and thus the R18 R-UE may receive MSGB or MSG4 for a bandwidth exceeding a bandwidth of 5 MHz (e.g., 20 MHz). In this case, the R18 R-UE may not be able to transmit HARQ-ACK for the PDSCH included in the MSGB within the minimum time interval required for a normal UE (i.e., without bandwidth limitation) due to its limited processing capability for PDSCH, and the like. Therefore, as described below, relaxation may be required for PUCCH transmission reporting HARQ-ACK for MSGB PDSCH reception.

In detail, for DCI format 1_0 scheduling a PDSCH transferred through MSG4 (e.g., RRC Setup and/or Contention Resolution MAC CE) or MSGB (e.g., SuccessRAR MAC CE), a PUCCH transferring HARQ-ACK information for the PDSCH may be transmitted in a slot determined based on a value of the PDSCH-to-HARQ_feedback timing indicator field in the DCI, as described below.

- When the UE is not an R18 R-UE (i.e., a normal UE or an R17 R-UE), the UE may determine a slot for transmission of the PUCCH based on a 3-bit PDSCH-to-HARQ_feedback timing indicator field value mapped to {1, 2, 3, 4, 5, 6, 7, 8}. For example, the UE may transmit a PUCCH including HARQ-ACK in a first slot after a PDSCH reception slot when the PDSCH-to-HARQ_feedback timing indicator field value is 000, transmit a PUCCH including HARQ-ACK in a second slot after a PDSCH reception slot when the PDSCH-to-HARQ_feedback timing indicator field value is 001, and transmit a PUCCH including HARQ-ACK in a third slot after a PDSCH reception slot when the PDSCH-to-HARQ_feedback timing indicator field value is 010.

When the UE is an R18 R-UE, the UE may re-interpret the 3-bit PDSCH-to-HARQ_feedback timing indicator field value and map it to a different (extended) slot set (e.g., {7, 8, 12, 16, 20, 24, 28, 32}) than the 3-bit PDSCH-to-HARQ_feedback timing indicator field value. For example, the UE may transmit a PUCCH including HARQ-ACK in a seventh slot after a PDSCH reception slot when the PDSCH-to-HARQ_feedback timing indicator field value is 000, transmit a PUCCH including HARQ-ACK in an eighth slot after a PDSCH reception slot when the PDSCH-to-HARQ_feedback timing indicator field value is 001, and transmit a PUCCH including HARQ-ACK in a 12^{th} slot after a PDSCH reception slot when the PDSCH-to-HARQ_feedback timing indicator field value is 010.

For example, for HARQ-ACK for MSG4 PDSCH or MSGB PDSCH of RACH, the R18 R-UE may report to the gNB information about using/mapping a different (and extended) set of slots for the PDSCH-to-HARQ_feedback Timing Indicator field value via a specific PRACH preamble ID (or, in case of a specific RACH, a specific LCID value of MAC PDU of MSG3 or MSGA PUSCH).

In the initial access process in which the capability of the UE is unknown, the UE may not know the sub-BWP to be selected, and thus the PDSCH may be received in the RACH procedure according to the above relaxed method. However, after switching to RRC_CONNECTED mode, the BS may know the capabilities of the UE, and thus the BS may configure a separate sub-BWP for the UE. In this case, the relaxed PDSCH processing time may not be applied.

### Frequency hopping method of BWP and Sub-BWP

A BS may separately configure an initial UL/DL BWP into a plurality of overlapped or non-overlapped sub-BWPs for a UE RRC_IDLE or RRC_INACTIVE state. The BS may separately configure one or more UL/DL BWPs for a UE in RRC_CONNECTED state into a plurality of overlapped or non-overlapped sub-BWPs.

As such, when an active BWP of the UE is separately configured into a plurality of overlapped or non-overlapped sub-BWPs, the UE may receive a PDCCH and/or a PDSCH and/or a reference signal from one sub-BWP for one BWP at a time (a specific time) through the plurality of sub-BWPs in the active DL BWP based on a specific frequency hopping pattern and may transmit a PUCCH and/or a PUSCH and/or a sounding reference signal (SRS) through one sub-BWP for one BWP at a time (a specific time) through the plurality of sub-BWPs in the active UL BWP based on the specific frequency hopping pattern. The UE in RRC_IDLE or RRC_INACTIVE state may select a sub-BWP (or an initial active sub-BWP) based on the frequency hopping pattern from an initial DL BWP, may receive paging, system information, or RACH MSG2/MSG4/MSGB, and may transmit RACH MSG1/MSGA/MSG3 by selecting a sub-BWP (or an initial active sub-BWP) based on the frequency hopping pattern from an initial UL BWP.

In a method based on the frequency hopping pattern, the frequency hopping pattern may include one or more of the following options.
> The BS may transfer configuration information about one or more hopping patterns and an ID for each of the plurality of hopping patterns through an RRC message, and may transfer indication information indicating the ID of the hopping pattern to be applied through an RRC message (MAC CE or DCI). The UE may receive the configuration information, and when an ID is indicated through the indication information, the UE may perform the following operation.
   - When frequency hopping is not currently applied/executed, the UE may transmit and receive a signal based on the frequency hopping pattern of the indicated ID.
   - When frequency hopping is currently applied/executed, the UE may change the frequency hopping pattern of the indicated ID to a frequency hopping pattern and perform signal transmission/reception.
   - The transmission and reception operation of the signal may be performed based on the frequency hopping pattern according to the ID after a certain time immediately after receiving the ID. Here, the certain time may be designated/determined based on the UE capability or indicated/determined through an RRC configuration of the BS.
> The BS and the UE may configure a pattern for frequency hopping a frequency period of 5 MHz or a frequency bandwidth of 5 MHz, which is a sub-BWP, based on a symbol index, a slot index, a subframe index, and/or an SFN index, as follows.
   - The BS may connect/map at least one BWP (and/or at least one sub-BWP) with a specific symbol index, a specific slot index, a specific subframe index, and/or a specific SFN index in the hopping pattern. Alternatively, the BS may connect/map a specific BWP and/or a specific sub-BWP to at least one symbol index, at least one slot index, at least one subframe index, and/or at least one SFN index. As such, by connecting different BWPs (and/or different sub-BWPs) for each symbol index, slot index, subframe index, and/or SFN index (in this pattern), the BS may configure a frequency hopping pattern for frequency hopping between BWPs (and/or sub-BWPs) over time. When the frequency hopping pattern is configured as such, the UE may be allocated a PDSCH or PUSCH resource scheduled by the DCI according to a sub-BWP connected to a specific symbol index, a specific slot index, a specific subframe index, and/or a specific SFN index based on the configured frequency hopping pattern.
   - For example, when the UE receives DCI in a first slot of a first subframe, the UE may transmit a PUSCH (or receive a PDSCH) scheduled by the DCI in a first sub-BWP of the first BWP. Alternatively, when the UE receives the DCI in a second slot of the first subframe, the UE may transmit the PUSCH scheduled by the DCI (or receive the PDSCH) in a second sub-BWP of the first or second BWP. In this case, the UE may transmit a PSUCH or receive a PDSCH based on the frequency hopping pattern. Through this, a phenomenon of resources being concentrated on the specific frequency or a specific sub-BWP (or a phenomenon of resources being concentrated and allocated) may be resolved.

When the frequency hopping pattern is configured, the UE may transmit and receive a signal as follows.
- When DCI received in a first slot indicates that a PDSCH is transmitted in a second slot, the UE may determine a BWP and/or sub-BWP for a second slot according to a configured frequency hopping pattern, and determine a PDSCH resource in the determined sub-BWP of the determined BWP to receive the PDSCH. Here, the first slot and the second slot may be the same or different.
- When the DCI received in the first slot indicates transmission of a PUSCH in the second slot, the UE may determine a BWP and/or sub-BWP for the second slot according to the configured frequency hopping pattern, and transmit the PUSCH based on the PUSCH resources allocated in the determined sub-BWP of the determined BWP. Here, the first slot and the second slot may be the same or different.
- When a specific semi-persistent scheduling (SPS) is activated, the UE may determine a BWP and/or sub-BWP for a slot to which the corresponding SPS PDSCH is allocated according to a configured frequency hopping pattern, and receive the SPS PDSCH in an SPS PDSCH resource allocated in the determined sub-BWP of the determined BWP.
- When a specific CG is activated, the UE may determine a BWP and/or sub-BWP for a slot to which a corresponding CG PUSCH is allocated according to a configured frequency hopping pattern, and transmit the CG PUSCH based on the CG PUSCH resources allocated to the determined sub-BWP of the determined BWP.

### R-SIB1 reception of Re1.18 R-UE

The Rel.18 R-UE receives the Rel.18 PDSCH transmitting system information according to the methods 1, 2, and 3. In this case, the DCI of methods 1, 2, and 3 is DCI of which CRC is scrambled with SI-RNTI.

When Rel.18 PDSCH transmits R-SIB1 for Rel.18 R-UE, the DCI may schedule Rel.18 PDSCH for R-SIB1 as follows.
(1) Opt 1: One DCI on CORESET shared by pre-Rel.18 UE and Rel.18 UE schedules pre-Rel.18 SIB1 as well as Rel.18 R-SIB1 in FDM within an initial DL BWP of 20 MHz.
(2) Opt 2: One DCI on the CORESET shared by pre-Rel.18 UE and Rel.18 UE schedules pre-Rel.18 SIB1 within the initial DL BWP of 20 MHz as well as Rel.18 R-SIB1 outside the initial DL BWP of 20 MHz via FDM.
(3) Opt 3: One DCI on CORESET shared by pre-Rel.18 UE and Rel.18 UE schedules pre-Rel.18 SIB1 as well as Rel.18 R-SIB1 in FDM within an initial DL BWP of 20 MHz. In Opt3, Rel.18 PDSCH transferring Rel.18 R-SIB1 is scheduled within (sub)BWP of 5 MHz or BW position, and in contrast, a legacy PDSCH transferring pre-Rel.18 SIB1 is scheduled within an initial BWP of 5 MHz or an initial BWP of 20 MHz.

The BS may indicate via the DCI or MIB whether the DCI schedules both Rel.18 R-SIB1 and pre-Rel.18 SIB1, such as the Opt.

When a Rel.18 R-UE receives an existing SIB1 or a DCI scheduling the existing SIB1, the Rel.18 R-UE receives a separate cellBarred parameter for the Rel.18 R-UE from the existing SIB1 or from the DCI scheduling the existing SIB1. Based on the received cellBarred parameter, the Rel.18 R-UE determines whether the UE is capable of accessing a cell or whether the cell needs to be barred.

When the Rel.18 R-UE does not receive the existing SIB1 and receives a new R-SIB1 or a DCI scheduling an R-SIB1, the UE selects a sub-BWP for the R-SIB1 and receives a separate cellBarred parameter for the Rel.18 R-UE from the DCI of the selected sub-BWP or the R-SIB1. Based on the received cellBarred parameter, the Rel.18 R-UE determines whether the UE is capable of accessing a cell or whether the cell needs to be barred.

When on-demand SI is configured, the BS may configure dedicated RACH resources for on-demand SI requests. Alternatively, a dedicated RACH resource may be configured for UE identification during initial access. For the on-demand SI request or the UE identification during initial access, the BS may separately allocate RACH resources for Rel. 17 R-UEs, RACH resources for Rel. 18 R-UEs, and RACH resources for a normal UE. The BS may separately allocate a RACH resource for an option BW1 UE, a RACH resource for an option BW2 UE, and a RACH resource for an option BW3 UE for an Rel.18 R-UE. These different RACH resources may be separately allocated through the existing SIB1 and R-SIB1. In this case, the Rel.18 R-UE selects a PRACH resource that matches a UE type thereof and transmits MSG1 or MSGA. It may be possible to indicate an Rel.18 R-UE through the (sub-)header of the MAC PDU of MSG3 PUSCH or MSGA PUSCH, or to indicate an Option BW1 or BW2 or BW3 depending on a UE type.

### Paging reception of Re1.18 R-UE

The Rel.18 R-UE receives the Rel.18 PDSCH transmitting a paging message according to the methods 1, 2, and 3. In this case, the DCI of methods 1, 2, and 3 is DCI of which CRC is scrambled with P-RNTI.

In the methods 1, 2, and 3, instead of the DCI, the DCI for paging early indication (PEI) may indicate a (sub-)BWP or BW location for the R-UE for Rel.18 paging PDSCH reception. Alternatively, in the methods 1, 2, and 3, instead of the DCI, the DCI for PEI may provide frequency domain resource allocation (FDRA) and/or time domain resource allocation (TDRA) information for Rel.18 paging PDSCH reception.

When the tracking reference signal (TRS) for paging is configured for Rel.18 R-UE, the Rel.18 TRS may be configured as follows.
(1) Opt 1: The TRS for paging of Rel.18 R-UE is configured only within the initial BWP or sub-BWP or BW location of 5 MHz for Rel.18 R-UE.
   When a TRS for a Rel.18 R-UE performs frequency hopping, the TRS performs frequency hopping only within the initial BWP or sub-BWP or BW location of 5 MHz for the Rel.18 R-UE.
(2) Opt 2: The TRS for paging of Rel.18 R-UE is also configured outside the initial BWP or sub-BWP or BW location of 5 MHz for Rel.18 R-UE. In this case, the TRS is configured within the initial BWP for Rel.17 R-UE at 20 MHz.

The Rel.18 R-UE (especially UE with option BW1 or 2) receive TRS through RF re-tuning.

FIG. 12 is a diagram for explaining a method by which a UE performs a RACH procedure to transmit a signal to a specific cell or BS.

Referring to FIG. 12, the UE may transmit a first message for performing a Random Access Channel (RACH) procedure for a specific cell (S121). For example, the first message may be MSG 1 of a 4-step RACH including a PRACH preamble, or MSG A of a 2-step RACH including a PRACH preamble and a PUSCH.

Then, the UE may receive a second message responding to the first message from the specific cell (S123). Here, the second message may be MSG 2 and/or MSG 4 of 4-step RACH, or MSG B of 2-step RACH. For example, the MSG B may correspond to a RAR message and may include an MSGB PDCCH (an MSGB transmitted via a PDCCH or for the PDCCH) and an MSGB PSDCH (an MSGB transmitted via a PDSCH or for the PDSCH). For example, the MSGB may be a Success Random Access Response (RAR) message.

Then, the UE may transmit a Physical Uplink Control Channel (PUCCH) including a HybridAutomatic Repeat Request-acknowledgement (HARQ-ACK) related to the second message based on a specific minimum time interval (S125). For example, when the second message includes a Success Random Access Response (RAR) (or, if the PDSCH included in the second message includes a success RAR), the UE may transmit a PUCCH including HARQ-ACK information for the Success RAR or the PDSCH.

As described in the table of contents of "PDSCH processing/HARQ feedback time relaxation method during initial access", during the initial access process in which the capability of the UE is unknown, the sub-BWP to be selected by the UE is unknown, and thus the R18 R-UE may receive MSGB or MSG4 for a bandwidth exceeding a bandwidth of 5 MHz (e.g., 20 MHz). In this case, the R18 R-UE may not be able to transmit HARQ-ACK for the PDSCH included in the MSGB within the minimum time interval required for a normal UE (i.e., without bandwidth limitation) due to its limited processing capability for PDSCH, and the like. Therefore, as described below, relaxation may be required for PUCCH transmission reporting HARQ-ACK for MSGB PDSCH reception.

In detail, the UE may transmit the PUCCH including the HARQ-ACK information when a time interval between a last symbol of the PDSCH related to a second message and the first symbol of the PUCCH is not less than the specific minimum time. For example, when a time interval between a first symbol of the transmission time resource of the PUCCH determined/indicated based on the DCI/PDCCH related to the second message (or the PDCCH included in the second message) and the last symbol of the PDSCH scheduled by the DCI/PDCCH is longer than the specific minimum time, the UE may transmit a PUCCH including a HARQ-ACK for the PDSCH. In contrast, when the interval between the last symbol of the PDSCH and the first symbol of the PUCCH is less than the specific minimum time interval, the UE may perform the RACH procedure again without transmitting the PUCCH including the HARQ-ACK for the PDSCH.

Here, the specific minimum time interval may be different depending on whether the UE is a first UE (or an R18 R-UE, or a first UE type) of which a bandwidth is limited to a first size (e.g., 5 MHz), such as in Options 2A, 2B or 2C above, or a second UE (or an R17 R-UE with a bandwidth limited to 20 MHz, or a normal UE with no bandwidth limitation, or a second UE type). In detail, the specific minimum time interval may be a sum of the processing time (N_{T,1}) of a Physical Downlink Shared Channel (PDSCH) and a specific time according to the capability of the UE as described above. In this case, the specific time may be configured differently depending on whether the UE is a first UE of which a bandwidth is limited to a first size (e.g., 5 MHz) as described in option 2A, 2B or 2C above, or a second UE of which a bandwidth is not limited to the first size. For example, based on the fact that the UE is a first UE supporting a limited bandwidth of the first size or less, the specific time may be configured to a second specific time that is longer than the first specific time for a second UE that does not support a limited bandwidth of the first size or less. That is, when the UE is the first UE, the UE may have a specific time that is longer than when the UE is the second UE (or, when the UE is the first terminal, a specific time that is longer than when the UE is the second UE may be configured), and when the UE is the second UE, the UE may have a specific minimum time interval that is longer than when the UE is the second UE (a specific minimum time interval that is longer than when the UE is the second UE may be configured).

For example, the first specific time may be 0.5 msec as described above, and the second specific time may be a time longer than 0.5 msec (e.g., 1.0 msec or 1.5 msec). The second specific time may be configured to 1 msec or 1.5 msec based on a Subcarrier Spacing (SCS) size of the PDSCH. For example, when the Subcarrier Spacing (SCS) size is 15 KHz, the second specific time may be configured to 1.5 msec. Alternatively, when the SCS size is 30 KHz, the second specific time may be configured to 1 msec.

Alternatively, as described in Option 2C, a transmission slot of the PUCCH may be determined based on a value indicated by the HARQ feedback timing indicator field included in the successful RAR and a slot offset configured separately for the first UE. Here, the slot offset may be configured via SystemInformationBlockType1 (SIB1) or System Information (SI).

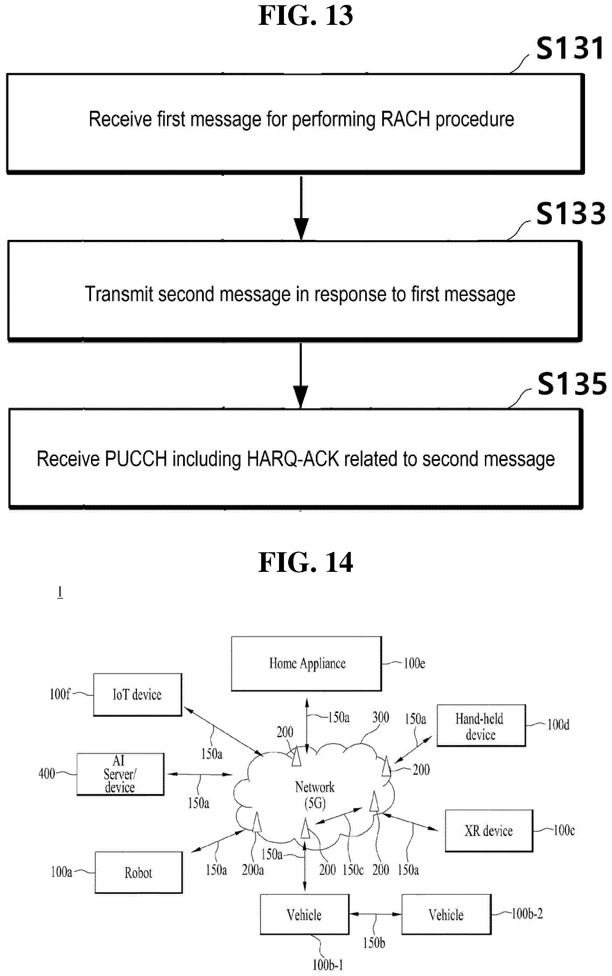

FIG. 13 is a diagram for explaining a method by which a BS receives a signal from a UE performing a RACH procedure.

Referring to FIG. 13, the BS may receive a first message for performing a Random Access Channel (RACH) procedure from the UE (S131). For example, the first message may be MSG 1 of a 4-step RACH including a PRACH preamble, or MSG A of a 2-step RACH including a PRACH preamble and data (PUSCH).

Then, the BS may transmit a second message responding to the first message (S133). Here, the second message may be MSG 2 and/or MSG 4 of 4-step RACH, or MSG B of 2-step RACH.

Then, the BS may receive a Physical Uplink Control Channel (PUCCH) including a Hybrid Automatic Repeat Request-acknowledgement (HARQ-ACK) related to the second message transmitted based on a specific minimum time interval (S135). For example, when the BS transmits the second message including a success random access response (RAR), the BS may receive a PUCCH including HARQ-ACK information for the success RAR or the PDSCH from the terminal.

As described in the table of contents of "PDSCH processing/HARQ feedback time relaxation method during initial access", when the UE is an R-18 R-UE (or, the first terminal), relaxation may be required for PUCCH transmission reporting HARQ-ACK for MSGB PDSCH reception for the UE.

In detail, the BS may receive a PUCCH including the HARQ-ACK information when a time interval between a last symbol of the PDSCH related to the second message and a first symbol of the PUCCH (e.g., a first symbol of a transmission time interval of the PUCCH indicated/allocated by the BS) is not less than a specific minimum time. For example, when a time interval between a first symbol of the transmission time resource of the PUCCH determined/indicated based on the DCI/PDCCH related to the second message (or the PDCCH included in the second message) and the last symbol of the PDSCH scheduled by the DCI/PDCCH is longer than the specific minimum time, the BS may receive a PUCCH including a HARQ-ACK for the PDSCH. In contrast, when the interval between the last symbol of the PDSCH and the first symbol of the PUCCH is less than the specific minimum time interval, the BS may not receive a PUCCH including the HARQ-ACK for the PDSCH.

Here, the specific minimum time interval may be different depending on whether the UE is a first UE (or an R18 R-UE) of which a bandwidth is limited to a first size (e.g., 5 MHz), such as in Options 2A, 2B or 2C above, or a second UE (or an R17 RUE with a bandwidth limited to 20 MHz, or a normal UE with no bandwidth limitation). In detail, the specific minimum time interval may be a sum of the processing time (N_{T,1}) of a Physical Downlink Shared Channel (PDSCH) and a specific time according to the capability of the UE as described above. In this case, the specific time may be configured differently depending on whether the UE is a first UE of which a bandwidth is limited to a first size (e.g., 5 MHz) as described in option 2A, 2B or 2C above, or a second UE of which a bandwidth is not limited to the first size. For example, based on the fact that the UE is a first UE having a limited bandwidth of the first size or less, the specific time may be configured to a second specific time that is longer than the first specific time for a second UE of which a bandwidth is not limited to the first size. That is, when the UE is the first UE, the UE may have a specific time that is longer than when the UE is the second UE (or, when the UE is the first terminal, a specific time that is longer than when the UE is the second UE may be configured), and when the UE is the second UE, the UE may have a specific minimum time interval that is longer than when the UE is the second UE (a specific minimum time interval that is longer than when the UE is the second UE may be configured).

For example, the first specific time may be 0.5 msec as described above, and the second specific time may be a time longer than 0.5 msec (e.g., 1.0 msec or 1.5 msec). The second specific time may be configured to 1 msec or 1.5 msec based on a Subcarrier Spacing (SCS) size of the PDSCH. For example, when the Subcarrier Spacing (SCS) size is 15 KHz, the second specific time may be configured to 1.5 msec. Alternatively, when the SCS size is 30 KHz, the second specific time may be configured to 1 msec.

As such, by configuring a minimum time interval for an R18 R-UE limited to a specific bandwidth in a RACH procedure to be longer than that for a normal UE not limited a specific bandwidth, it is possible to provide the R18 R-UE with sufficient time required to transmit a PUCCH including a HARQ-ACK for a PDSCH included in MSGB or MSG4. Alternatively, by controlling a minimum time interval, the R18 R-UE may effectively transmit a PUCCH including a HARQ-ACK for the MSGB or MSG4 even if the MSGB or MSG4 is received in a bandwidth exceeding a specific bandwidth during an initial access process in which the capability of the UE is unknown. Alternatively, a success rate of the RACH procedure of the R18 R-UE may be significantly improved through effective transmission of PUCCH including HARQ-ACK for the MSGB or MSG4.

FIG. 14 illustrates a communication system 1 applied to the present disclosure.

Referring to FIG. 14, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to- Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

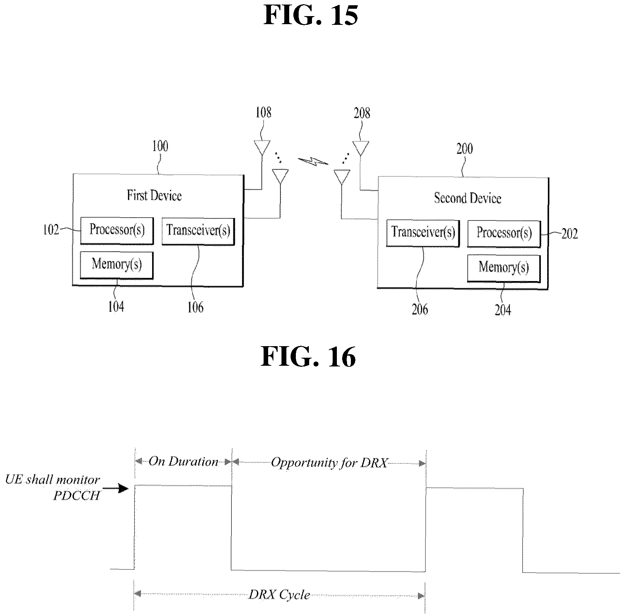

FIG. 15 illustrates wireless devices applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to an example, the first wireless device 100 or UE may include a processor 102 and a memory 104 connected to the RF transceiver. The memory 104 may include at least one program for performing operations related to the embodiments described with reference to FIGS. 9 to 13.

In detail, the processor 102 may control the RF transceiver 106 to transmit a first message for performing a Random Access Channel (RACH) procedure for a specific cell, receive a second message responding to the first message from the specific cell, and transmit a Physical Uplink Control Channel (PUCCH) including a Hybrid Automatic Repeat Request-acknowledgement (HARQ-ACK) related to the second message based on a specific minimum time interval. Here, the specific minimum time interval is the sum of a processing time of the Physical Downlink Shared Channel (PDSCH) according to the capability of the UE and a specific time, and based on the UE being a first UE with a bandwidth limited to a first size, the specific time may be configured to a second specific time that is longer than the first specific time for a second UE of which bandwidth is not limited to the first size.

Alternatively, the processor 102 and the memory 104 may be processing devices that control a UE that performs communication with a BS/specific cell. In this case, the processing device may include at least one processor, and at least one memory connected to the at least one processor and storing instructions, wherein the instructions, based on being executed by the at least one processor, cause the UE to transmit a first message for performing a Random Access Channel (RACH) procedure for a specific cell, receive a second message responding to the first message from the specific cell, and transmit a Physical Uplink Control Channel (PUCCH) including a Hybrid Automatic Repeat Request-acknowledgement (HARQ-ACK) related to the second message based on a specific minimum time interval. Here, the specific minimum time interval is the sum of a processing time of the Physical Downlink Shared Channel (PDSCH) according to the capability of the UE and a specific time, and based on the UE being a first UE with a bandwidth limited to a first size, the specific time may be configured to a second specific time that is longer than the first specific time for a second UE of which bandwidth is not limited to the first size.

Alternatively, a non-transitory computer-readable storage medium having recorded thereon instructions for performing the proposed methods described with reference to FIGS. 9 to 13 may be configured.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 16 is a diagram for explaining a DRX (Discontinuous Reception) operation of a UE according to one embodiment.

The UE can perform DRX operation while performing the procedures and/or methods described/suggested above. The UE with DRX configured can reduce power consumption by discontinuously receiving DL signals. DRX can be performed in the RRC (Radio Resource Control)_IDLE state, the RRC_INACTIVE state, and the RRC_CONNECTED state. In the RRC_IDLE state and the RRC _INACTIVE state, DRX is used to discontinuously receive paging signals. Hereinafter, DRX performed in the RRC_CONNECTED state (RRC_CONNECTED DRX) will be described.

A DRX cycle consists of On Duration and Opportunity for DRX. The DRX cycle defines a time interval during which the On Duration is periodically repeated. The On Duration represents a time period during which the UE monitors to receive a PDCCH. When DRX is configured, the UE performs PDCCH monitoring during the On Duration. If a PDCCH is successfully detected during the PDCCH monitoring, the UE operates an inactivity timer and remains in an awake state. On the other hand, if no PDCCH is successfully detected during the PDCCH monitoring, the UE enters a sleep state after the On Duration ends. Therefore, when DRX is configured, PDCCH monitoring/reception may be performed discontinuously in the time domain when performing the procedures and/or methods described/proposed above. For example, when DRX is configured, a PDCCH reception opportunity (e.g., a slot having a PDCCH search space) in the present disclosure may be configured discontinuously according to the DRX configuration. On the other hand, when DRX is not configured, PDCCH monitoring/reception may be performed continuously in the time domain while performing the procedure and/or method described/proposed above. For example, when DRX is not configured, PDCCH reception opportunities (e.g., slots having PDCCH search spaces) in the present disclosure may be configured continuously. Meanwhile, PDCCH monitoring may be restricted in a time interval configured as a measurement gap, regardless of whether DRX is configured.

The above-described embodiments are combinations of elements and features of the present disclosure in specific forms. The elements or features may be considered selective unless mentioned otherwise. Each element or feature may be implemented without being combined with other elements or features. Further, the embodiments of the present disclosure may be configured by combining some elements and/or some features. Operation orders described in the embodiments of the present disclosure may be rearranged. Some constructions or features of any one embodiment may be included in another embodiment or may be replaced with corresponding constructions or features of another embodiment. It is obvious that claims that are not explicitly cited in the appended claims may be presented in combination as an embodiment of the present disclosure or included as a new claim by subsequent amendment after the application is filed.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The present disclosure can be used in a UE, a base station, or other equipment of a wireless mobile communication system.

## Claims

1. A method of transmitting a signal by a user equipment (UE) in a wireless communication system, the method comprising:
transmitting a first message for performing a Random Access Channel (RACH) procedure for a specific cell;
receiving a second message in response to the first message from the specific cell; and
transmitting a Physical Uplink Control Channel (PUCCH) including a Hybrid Automatic Repeat Request-acknowledgement (HARQ-ACK) related to the second message based on a specific minimum time interval,
wherein the specific minimum time interval is a sum of a processing time of a Physical Downlink Shared Channel (PDSCH) according to a capability of the UE and a specific time, and
wherein, based on that the UE is a first UE with a bandwidth limited to a first size, the specific time is configured to a second specific time that is longer than a first specific time for a second UE with a bandwidth not limited to the first size.

2. The method of claim 1, wherein the PUCCH is transmitted based on a time interval between a last symbol of the PDSCH for the second message and a first symbol of the PUCCH being not less than the specific minimum time.

3. The method of claim 1, wherein the second specific time is configured to a time longer than the first specific time of 0.5 msec.

4. The method of claim 2, wherein the PDSCH includes a success Random Access Response (RAR) for the UE.

5. The method of claim 2, wherein the second specific time is configured to 1 msec or 1.5 msec based on a Subcarrier Spacing (SCS) size of the PDSCH related to the second message.

6. The method of claim 5, wherein the second specific time is configured to 1.5 msec based on the SCS size being 15 KHz.

7. The method of claim 5, wherein the second specific time is configured to 1 msec based on the SCS size being 30 KHz.

8. The method of claim 1, wherein the second message includes a Success Random Access Response (RAR), and
wherein, based on the UE being the first UE, a transmission slot of the PUCCH is determined based on a value indicated by a HARQ Feedback Timing Indicator field included in the Success RAR and a slot offset configured separately for the first UE.

9. The method of claim 8, wherein the slot offset is configured through SystemInformationBlockType1 (SIB1) or System Information (SI).

10. The method of claim 1, wherein the first UE is a first reduced capability (RedCap) type UE capable of performing communication in a limited bandwidth of 5 MHz, and
wherein the second UE is a second RedCap type UE capable of performing communication in a limited bandwidth of 20 MHz.

11. A non-transitory computer-readable storage medium storing instructions for performing the method of claim 1.

12. A user equipment (UE) for receiving a signal in a wireless communication system, the UE comprising:
a Radio Frequency (RF) transceiver; and
a processor connected to the RF transceiver,
wherein the processor controls the RF transceiver to transmit a first message for performing a Random Access Channel (RACH) procedure for a specific cell, receive a second message in response to the first message from the specific cell, and transmit a Physical Uplink Control Channel (PUCCH) including a Hybrid Automatic Repeat Request-acknowledgement (HARQ-ACK) related to the second message based on a specific minimum time interval,
wherein the specific minimum time interval is a sum of a processing time of a Physical Downlink Shared Channel (PDSCH) according to a capability of the UE and a specific time, and
wherein, based on that the UE is a first UE with a bandwidth limited to a first size, the specific time is configured to a second specific time that is longer than a first specific time for a second UE with a bandwidth not limited to the first size.

13. A processing device for controlling a user equipment (UE) receiving a signal in a wireless communication system, the processing device comprising:
at least one processor; and
at least one memory coupled to the at least one processor and storing instructions,
wherein the instructions cause the UE to transmit a first message for performing a Random Access Channel (RACH) procedure for a specific cell, receive a second message responding to the first message from the specific cell, and transmit a Physical Uplink Control Channel (PUCCH) including a Hybrid Automatic Repeat Request-acknowledgement (HARQ-ACK) related to the second message based on a specific minimum time interval,
wherein the specific minimum time interval is a sum of a processing time of a Physical Downlink Shared Channel (PDSCH) according to a capability of the UE and a specific time, and
wherein, based on that the UE is a first UE with a bandwidth limited to a first size, the specific time is configured to a second specific time that is longer than a first specific time for a second UE with a bandwidth not limited to the first size.

14. A method of receiving a signal by a base station in a wireless communication system, the method comprising:
receiving a first message for performing a Random Access Channel (RACH) procedure from a user equipment (UE);
transmitting a second message in response to the first message; and
receiving a Physical Uplink Control Channel (PUCCH) including a Hybrid Automatic Repeat Request-acknowledgement (HARQ-ACK) related to the second message based on a specific minimum time interval,
wherein the specific minimum time interval is a sum of a processing time of a Physical Downlink Shared Channel (PDSCH) according to a capability of the UE and a specific time, and
wherein, based on that the UE is a first UE with a bandwidth limited to a first size, the specific time is configured to a second specific time that is longer than a first specific time for a second UE with a bandwidth not limited to the first size.

15. A base station (BS) for receiving a signal in a wireless communication system, the BS comprising:
a radio frequency (RF) transceiver; and
a processor connected to the RF transceiver,
wherein the processor controls the RF transceiver to receive a first message for performing a Random Access Channel (RACH) procedure from a user equipment (UE), transmit a second message in response to the first message, and receive a Physical Uplink Control Channel (PUCCH) including a Hybrid Automatic Repeat Request-acknowledgement (HARQ-ACK) related to the second message based on the specific minimum time interval, and
wherein the specific minimum time interval is a sum of a processing time of a Physical Downlink Shared Channel (PDSCH) according to a capability of the UE and a specific time, and
wherein, based on that the UE is a first UE with a bandwidth limited to a first size, the specific time is configured to a second specific time that is longer than a first specific time for a second UE with a bandwidth not limited to the first size.
